# FASCICULE DE BREVET EUROPEEN

(11) **EP 3 879 050 B1**
(45) Date de publication et mention de la délivrance du brevet: **22.05.2024**
(21) Numéro de dépôt: 21158890.0
(22) Date de dépôt: 24.02.2021
(51) Int. Cl.: E05B 65/00, H01M 50/119, H01M 50/107, H01M 50/131, H01M 50/202, H01M 50/224, H01M 50/233, H01M 50/514, H01M 50/522, H01M 50/581

(54) **ADAPTATEUR D'INTERFACE INTÉGRANT UN VERROU MAGNÉTIQUE LOGEANT AU MOINS UN ACCUMULATEUR OU FORMÉ PAR CE DERNIER ET ASSURANT LA FIXATION MAGNÉTIQUE DE CE DERNIER AVEC CONDUCTION ÉLECTRIQUE À UN BUSBAR (B1)**
SCHNITTSTELLENADAPTER MIT INTEGRIERTER MAGNETISCHER VERRIEGELUNG, DER MINDESTENS EINEN AKKUMULATOR AUFNIMMT ODER DURCH DIESEN GEBILDET WIRD UND DESSEN MAGNETISCHE BEFESTIGUNG MIT ELEKTRISCHER LEITUNG AN EINER STROMSCHIENE (B1) GEWÄHRLEISTET
INTERFACE ADAPTER INTEGRATING A MAGNETIC LATCH ACCOMMODATING OR FORMED BY AT LEAST ONE ACCUMULATOR AND ENSURING THE MAGNETIC FIXING OF THE LATTER WITH ELECTRICAL CONDUCTION TO A BUSBAR (B1)

(30) Priorité: 12.03.2020 FR 2002457
(43) Date de publication de la demande: 15.09.2021
(73) Titulaire: Commissariat à l'Energie Atomique et aux Energies Alternatives, 75015 Paris (FR)
(72) Inventeur: LEJOSNE, Johann, 38054 GRENOBLE (FR); JOST, Pierre, 38054 GRENOBLE (FR); PERICHON, Pierre, 38054 GRENOBLE (FR)
(74) Mandataire: Cabinet Nony

(56) Documents cités:
- CN-A- 107 732 069
- US-A1- 2011 223 776

## Description

### Domaine technique

La présente invention concerne le domaine des accumulateurs électrochimiques, et plus particulièrement des accumulateurs métal-ion ou autres chimies (plomb...).

L'invention vise en premier lieu à améliorer l'assemblage, le coût et la sécurité afférents d'un pack-batterie à pluralité de batteries ou accumulateurs avec des barres de connexion électrique, dites busbars.

Pour cela, l'invention propose des dispositifs de connexion/déconnexion par verrouillage/déverrouillage magnétique pour chaque accumulateur unitaire ou pour une branche d'accumulateurs au sein d'un pack-batterie.

Bien que décrite en référence à un accumulateur Lithium-ion, l'invention s'applique à tout accumulateur électrochimique métal-ion, c'est-à-dire également
Sodium-ion, Magnésium-ion, Aluminium-ion, voire d'autres chimies (Plomb..)...

### Technique antérieure

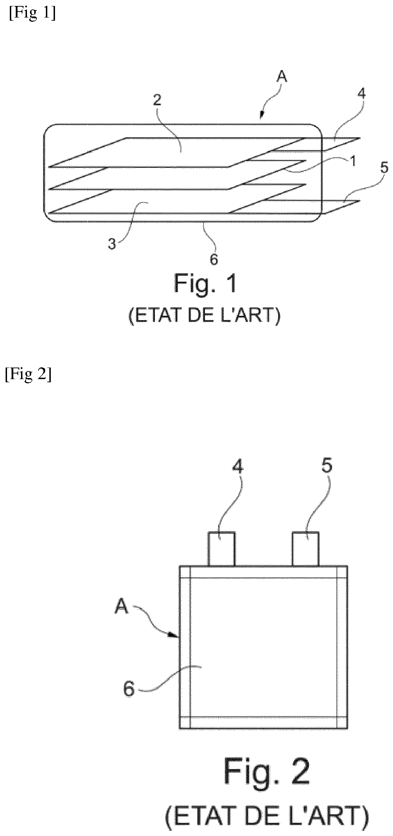

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boîtiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boîtiers ont également déjà été réalisées par bobinage autour d'un mandrin prismatique.

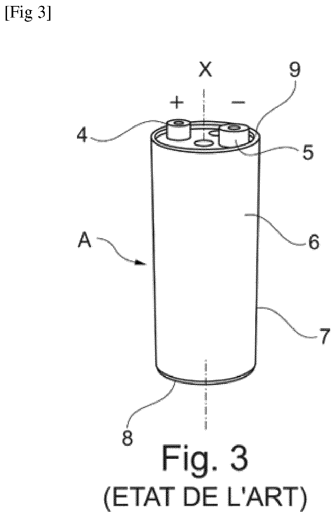

Un des types de boîtier rigide de forme cylindrique, usuellement fabriqué pour un accumulateur Li-ion de forte capacité, est illustré en figure 3.

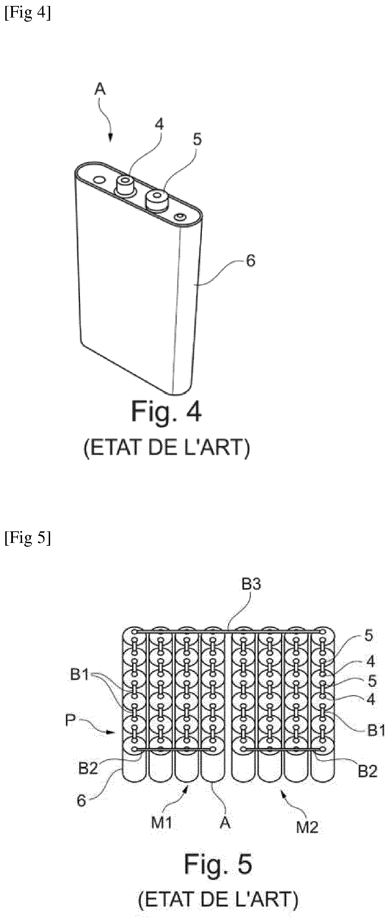

Un boîtier rigide de forme prismatique est également montré en figure 4.

Le boîtier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boîtier rigide largement fabriqué consiste également en un godet embouti et un couvercle, soudés entre eux sur leur périphérie. En revanche, les collecteurs de courant comprennent une traversée avec une partie faisant saillie sur le dessus du boîtier et qui forme une borne aussi appelée pôle apparent de la batterie.

La difficulté de réalisation d'une telle borne réside principalement dans l'assemblage des différents composants de la batterie afin d'avoir un design robuste. La nature des matériaux utilisée est également importante afin d'être compatible avec certains couples électrochimiques. En effet, la technologie Li-ion nécessite de préférence à sélectionner un grade d'aluminium le plus pur possible à l'intérieur de l'accumulateur pour éviter la présence de pollutions et la génération de couple galvaniques en présence de l'électrolyte pouvant mener à de la corrosion.

En outre, une borne en traversée étanche doit être robuste mécaniquement et respecter les conditions suivantes:
- ne pas se déformer au cours des étapes d'assemblage de l'accumulateur ;
- permettre l'assemblage de l'accumulateur avec un busbar et assurer le passage du courant avec ce dernier ;
- rester intègre pendant toute la durée de vie d'un accumulateur dans son application, c'est-à-dire résister aux vibrations, chocs mécaniques, variations de températures et de pression.., sans déformation et sans fuite ;
- permettre de drainer des courants élevés pouvant dépasser 50A, dans le cas d'un accumulateur seul, de capacité inférieure à 5Ah nominale, afin de pouvoir être utilisé dans des applications de puissance.

Généralement, les traversées étanches formant les bornes de sortie d'accumulateurs Li-ion, sont en cuivre nickelé car l'électrode négative est très souvent composée de graphite donc enduite sur du cuivre mais peuvent être également en aluminium pour des matériaux tel que le titanate, le sodium ou le silicium qui ont comme particularités d'être enduit sur un substrat d'aluminium.

La demande de brevet FR2989836 divulgue une traversée formant une borne de sortie d'un accumulateur métal-ion qui permet de faire circuler des courants très élevés, typiquement de l'ordre de 100A.

Un pack batterie P est constitué d'un nombre variable d'accumulateurs pouvant atteindre plusieurs milliers qui sont reliés électriquement en série ou en parallèle entre eux et généralement par des barres ou pistes de connexion mécanique et électrique, appelées usuellement, busbars.

D'une manière générale, plusieurs architectures électriques peuvent être définies au sein d'un pack-batterie P. Ainsi, des accumulateurs peuvent être reliés entre eux en parallèle, c'est-à-dire avec toutes les bornes positives reliées entre elles et toutes les bornes négatives également reliées entre elles. Ces liaisons forment une branche qui peut être reliée en série à une autre branche. On peut aussi avoir des accumulateurs reliés entre eux en série, c'est-à-dire que les bornes positives sont reliées aux bornes négatives. Ces liaisons forment une branche qui peut être reliée en parallèle à une autre branche.

Quelle que soit l'architecture, chaque branche en série ou en parallèle peut comporter généralement de deux à des dizaines d'accumulateurs.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

Les accumulateurs des packs batterie actuels sont généralement assemblés sur un ou plusieurs busbars par soudage, vissage ou frettage.

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Un tel assemblage est relativement long avec des coûts de production relativement élevés. En outre, les accumulateurs sous tension qui doivent être manipulés nécessitent l'obtention pour les opérateurs d'habilitations contraignantes, de type TST.

Le brevet CN 2285515 présente un support magnétique pour accumulateur de petite tension qui présente l'avantage d'une mise en connexion rapide sans serrage de l'accumulateur. Cette fixation peut être utilisée pour différentes applications de charge/décharge...avec des accumulateurs de faibles énergies. Mais, il n'est pas compatible avec des accumulateurs à hautes tensions mises en série sur un busbar au sein d'un pack-batterie.

Dans le développement et la fabrication des batteries lithium-ion, pour chaque profil de charge/décharge spécifique à chaque nouvelle demande, quels que soient les acteurs du marché, cela nécessite des dimensionnements précis (architectures électriques série/parallèle, mécaniques, thermiques...) pour concevoir de manière optimale un pack-batterie performant et sécuritaire.

Un système électrochimique lithium, que ce soit à l'échelle cellule, module ou pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur doit contrôler sa température, typiquement généralement inférieure à 70°C à sa surface extérieure de boitier, afin d'éviter de partir en emballement thermique qui peut être suivi d'une génération de gaz et d'explosion et/ou feu.

Également, le maintien d'une température inférieure à 70°C permet d'augmenter sa durée de vie, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Dans une batterie, ou pack-batterie à plusieurs accumulateurs Li-ion à hautes énergies, typiquement supérieure à 1kW.h, plusieurs accumulateurs sont mis en série pour obtenir le niveau de tension requis et de mise en parallèle pour obtenir le courant à fournir. La mise en série/parallèle peut se faire au niveau des accumulateurs, des modules avec une grande variété de topologies de câblage.

La mise en série ou parallèle d'accumulateurs plus ou moins différents peut avoir des conséquences sur les performances et durabilité résultantes pour le pack.

Il est ainsi reconnu que dans un pack-batterie, par exemple de véhicule électrique, les dispersions de vieillissements peuvent être élevées en fonction par exemple de la position des accumulateurs, par suite de dissymétries de vieillissement entre les accumulateurs ou des différences d'utilisations (variations thermiques entre le coeur et les bords du pack, gradient de courant...). Ainsi, des écarts d'états de santé SOH de l'ordre de 20% entre accumulateurs d'un même pack peuvent être observés.

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet.

De manière générale, une défaillance d'un accumulateur dans un pack batterie peut avoir plusieurs impacts :
- le dégagement, d'une part, de l'énergie stockée dans l'accumulateur en défaut et, d'autre part, de l'énergie d'autres accumulateurs du pack. Selon la topologie choisie pour le pack, l'énergie apportée par les autres accumulateurs du pack peut amener un risque de feu ou d'explosion qui n'existait pas sur l'accumulateur seul ;
- des réactions électrochimiques au coeur des accumulateurs peuvent conduire à la destruction des accumulateurs unitaires et provoquer une propagation d'un défaut interne à l'accumulateur (généralement un court-circuit interne) conduisant à l'explosion du pack. L'énergie de dégradation des composants internes peut ainsi être élevée. Dans ce cas, il est également nécessaire d'avoir recours à un système de pilotage (BMS) afin de protéger les autres cellules du pack, comme précisé ci-après ;
- le pack complet ne peut plus être utilisé pour l'application ou être en mode dégradé (énergie plus faible par exemple). Ainsi, si un défaut d'un accumulateur dans un pack est constaté, il est important de l'isoler rapidement, le rendre inerte, et assurer une continuité de service du pack restant. Par exemple, une batterie lithium ion d'APU intégré dans un aéronef ne doit pas perturber le fonctionnement du dit aéronef et assurer une sécurité optimale pendant le vol.

Il a déjà été proposé de réaliser un by-pass d'un accumulateur métal ion défaillant au sein d'un pack-batterie.

Ainsi, le brevet US 5438173 présente un capteur capable de réaliser un tel by pass : ce capteur permet de détecter une défaillance de la batterie et un commutateur ouvre alors automatiquement un autre chemin électrique autour de l'accumulateur défaillant, en contournant la défaillance et en permettant au reste du système de batterie de continuer à fonctionner. Le commutateur de dérivation de l'accumulateur est conçu pour être placé en parallèle avec l'accumulateur qu'il protège. Ce commutateur comprend deux ensembles d'actionneurs électromécaniques qui sont montés sur l'extrémité supérieure du boîtier d'accumulateur pour actionner deux pistons. Chacun des actionneurs électromécaniques comprend deux moitiés de bobine qui sont maintenues ensemble par un enroulement serré d'un fil de retenue qui se termine par un fil de pont reliant deux bornes électriques d'un actionneur. Chaque bobine, grâce à l'enroulement du fil de retenue, peut retenir un plongeur à ressort. Quand un courant électrique suffisant passe à travers les bornes et le fil de pont, ce dernier chauffe et se casse, ce qui provoque le déroulement du fil de retenue, et par là la séparation des bobines et donc la libération du piston.

De fait, ce système mécanique décrit dans ce brevet est complexe à mettre en oeuvre et ne permet pas de détecter la défaillance par l'accumulateur lui-même.

Le brevet US6093896 présente un système analogue avec les mêmes inconvénients, qui permet d'établir une dérivation automatique d'un accumulateur défaillant connecté en série au sein d'un pack batterie.

Autrement dit, à ce jour, l'ensemble des systèmes de bypass d'accumulateur défaillants au sein d'un pack batterie, qui ont été proposés, sont mécaniques avec généralement un capteur de défaut de l'accumulateur qui actionne une dérivation électrique du circuit.

Aussi, il n'existe pas à ce jour ni de système propre à un accumulateur conjuguant la déconnexion et l'inertage d'un accumulateur défaillant, afin d'éviter une propagation thermique du défaut au reste du pack.

Par « inertage », on entend ici et dans le cadre de l'invention, le fait d'arrêter l'emballement d'un accumulateur qui est généré par des réactions électrochimiques non souhaitées au sein de l'accumulateur, ou du moins de l'éloigner d' autres accumulateurs en fonctionnement. Par ailleurs, à l'échelle du module et du pack, typiquement en dessous de 0°C par exemple, il peut être nécessaire d'avoir recours à un pilotage particulier via un BMS, afin de limiter la puissance demandée au pack et d'éviter une dégradation des accumulateurs.

On rappelle ici que le BMS (acronyme anglais de « *Battery Management System* ») est utilisé afin de suivre l'état des différents accumulateurs (tension totale ou de chaque accumulateur, température, état de charge, profondeur de décharge, état de santé, débit du fluide de refroidissement, valeur du courant...) et de piloter les différents éléments de sécurité , tels des courants ne devant pas être trop élevés, des potentiels non adaptés (trop élevés ou trop faibles), des températures limites et a donc notamment pour fonction d'arrêter la fourniture de courant dès l'atteinte de valeurs de tension seuil, i.e. une différence de potentiels entre les deux matériaux d'insertion actifs. Le BMS stoppe donc le fonctionnement (charge, décharge) dès l'atteinte de tensions seuils. Un BMS surveille l'état des différents éléments d'un pack-batterie, tels que :
- la tension totale ou celle des accumulateurs individuels,
- la température, c'est-à-dire au moins une des températures choisies parmi la température moyenne, la température d'admission de liquide de refroidissement, la température de sortie de liquide de refroidissement, ou la température de chaque accumulateur,
- l'état de charge (SOC) ou la profondeur de décharge (DOD) qui indique le niveau de charge du pack,
- l'état de santé (SOH) qui est une mesure définie de l'état général du pack,
- le débit du fluide caloporteur pour le refroidissement de tout ou partie du pack,
- le courant électrique au sein ou hors du pack, ...

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, typiquement un court-circuit interne, au reste des composants du pack-batterie, ce qui peut conduire à l'extrême à l'explosion du pack. Dans ce cas, il est également nécessaire d'avoir recours au BMS, afin de protéger les accumulateurs. Par conséquent, un pack-batterie nécessite généralement au moins un BMS très performant, afin de générer des équilibrages de tension. Dans un pack-batterie, il peut y avoir un unique ou bien plusieurs BMS au sein du pack, voire un BMS par accumulateur.

De manière générale, il a déjà été proposé des solutions de pilotage d'un pack-batterie par le BMS pour commuter à la demande des accumulateurs du pack.

La demande de brevet FR2972306 propose ainsi un dispositif de gestion des accumulateurs élémentaires d'une batterie pour optimiser la charge et l'utilisation de la batterie. Chaque accumulateur élémentaire d'un étage peut être piloté sur la base d'une information mesurée localement au sein même de cet étage.

Le brevet FR2972307B1 divulgue une batterie comprenant des moyens de commande locale d'un interrupteur associé à la cellule électrochimique élémentaire de la batterie. Le circuit de commande des transistors de puissance est alimenté directement par la tension disponible au niveau de l'étage correspondant.

Également, le brevet FR2926168B1 propose un circuit électrique, destiné notamment à des véhicules automobiles, qui comporte un réseau de bord, alimentant des organes consommateurs, un moyen générateur d'énergie électrique, et au moins un moyen de stockage électrique commutable comportant des éléments aptes à fournir une tension variable, qui peuvent en outre être commutés successivement de sorte que le moyen de stockage électrique commutable peut fournir une tension régulée.

L'ensemble de ces brevets propose donc de dispositifs électroniques/électriques permettant la commutation qui ont notamment plusieurs fonctions de supervision. Mais ils peuvent être complexes, nécessitent de nombreuses redondances qui sont coûteuses et sont dépendant de l'électronique.

La demande de brevet CN 107732069 A décrit un pack-batterie comprenant une pluralité d'accumulateurs connectés en série et en parallèle au moyen de busbars, la connexion entre les bornes de sortie de deux accumulateurs adjacents ou entre un borne de sortie et un busbar étant réalisée au moyen d'un aimant permanent logé dans une pièce ferromagnétique.

La demande de brevet US 2011/223776 A1 décrit un système d'interconnexion modulaire pour connecter une pluralité d'accumulateurs entre eux par couplage magnétique.

En résumé, il existe un besoin d'améliorer :
- les solutions d'assemblage des accumulateurs métal-ion à des bus-bars, notamment afin de réduire le temps et leur coût d'assemblage ;
- les solutions de déconnexion d'un ou plusieurs accumulateurs défaillant au sein d'un pack-batterie, tout en garantissant la continuité de fonctionnement de ce dernier en toute sécurité. Le but de l'invention est de répondre au moins en partie à ces besoins.

### Exposé de l'invention

L'invention est définie par l'objet des revendications indépendantes 1 et 12.

Pour ce faire, l'invention concerne, sous l'un de ses aspects, et selon une première alternative un dispositif de connexion/déconnexion entre au moins un accumulateur (A) et une barre de connexion électrique, dite busbar (B 1), comprenant :
- un adaptateur d'interface comprenant :
   une première pièce ferromagnétique d'axe longitudinal (X), la première pièce ferromagnétique étant borgne en formant un logement d'au moins un accumulateur, au moins une partie de la paroi latérale et/ou du fond du logement étant en contact électrique avec une des bornes de sortie dudit accumulateur,
   au moins une deuxième et une troisième pièce ferromagnétique agencées en étant réparties autour de l'axe longitudinal (X) de la première pièce ferromagnétique,
   au moins une pièce de liaison mécanique et électrique, en matériau amagnétique, solidarisant la première pièce ferromagnétique aux deuxième et troisième pièces ferromagnétiques, en formant entre elles un volume dans lequel sont logés deux aimants permanents répartis autour de l'axe longitudinal (X) avec leurs pôles magnétiques opposés en série magnétique et reliés entre eux par la première pièce ferromagnétique et reliés chacun d'entre eux respectivement à la deuxième et à la troisième pièce ferromagnétique en constituant un verrou magnétique,
- au moins une quatrième pièce ferromagnétique, solidaire du busbar (B 1), formant une plaque de fermeture d'un circuit magnétique avec le verrou magnétique, le circuit magnétique fermé assurant, lors d'un fonctionnement normal de l'au moins un accumulateur, une connexion mécanique et électrique entre l'au moins un accumulateur et le busbar.

L'invention a également pour objet selon une deuxième alternative, un dispositif de connexion/déconnexion entre au moins un accumulateur (A) et une barre de connexion électrique, dite busbar (B 1), comprenant :
- au moins un accumulateur comprenant :
   un boitier d'axe longitudinal (X) constituant une première pièce ferromagnétique;
   au moins une deuxième et une troisième pièce ferromagnétique agencées en étant réparties autour de l'axe longitudinal (X) de la première pièce ferromagnétique,
   au moins un élément de liaison électrique, en matériau amagnétique, solidarisant la première pièce ferromagnétique aux deuxième et troisième pièces ferromagnétiques, en formant entre elles un volume dans lequel sont logés deux aimants permanents répartis autour de l'axe longitudinal (X) avec leurs pôles magnétiques opposés en série magnétique et reliés entre eux par la première pièce ferromagnétique et reliés chacun d'entre eux respectivement à la deuxième et à la troisième pièce ferromagnétique en constituant un verrou magnétique,
- au moins une quatrième pièce ferromagnétique, solidaire du busbar (B 1), formant une plaque de fermeture d'un circuit magnétique avec le verrou magnétique, le circuit magnétique fermé assurant, lors d'un fonctionnement normal de l'au moins un accumulateur, une connexion mécanique et électrique entre l'au moins un accumulateur et le busbar.

Par « série magnétique », on entend ici et dans le cadre de l'invention que les au moins deux aimants permanents sont agencés avec leurs pôles de sorte à réaliser la circulation d'un flux magnétique dans un circuit magnétique fermé sur lui-même entre le verrou magnétique et au moins une pièce ferromagnétique, solidaire du busbar B 1, afin d'assurer, lors d'un fonctionnement normal de l'accumulateur, une connexion mécanique et électrique entre l'accumulateur A et le busbar B1.

Par « axe longitudinal (X) », on entend ici et dans le cadre de l'invention, un axe allongé du logement borgne. Dans le cas d'un accumulateur de géométrie cylindrique, cet axe longitudinal (X) peut constituer l'axe de symétrie ou autrement dit central du cylindre. Mais dans le cas d'accumulateurs selon une autre géométrie, ou d'un groupe d'accumulateurs, l'axe longitudinal n'est pas nécessairement un axe de symétrie de cette géométrie ou groupe qui peut par définition ne pas en avoir.

Ainsi, l'invention consiste essentiellement à intégrer au sein d'un adaptateur d'interface un verrou magnétique qui loge intégralement l'accumulateur et qui forme avec une plaque de fermeture magnétique solidaire d'un busbar un circuit magnétique fermé, qui permet la connexion/déconnexion mécanique et électrique, par verrouillage/déverrouillage magnétique, entre l'accumulateur et un busbar.

L'invention permet de s'adapter à n'importe quel type d'accumulateur existant que l'adaptateur d'interface, qui sert en quelque sorte d'étui dans la première alternative, permet de loger aisément avant la connexion magnétique.

Le fonctionnement magnétique et électrique des dispositifs selon la première et deuxième alternative est identique.

Dans la deuxième alternative de l'invention, l'emballage de l'accumulateur en lui-même constitue une partie du verrou magnétique. Dans ce cas l'emballage de l'accumulateur doit être en matériau magnétique. De préférence, il peut s'agir de fer doux, avantageusement revêtu d'un revêtement anti-corrosion, ou d'acier inoxydable avec une nuance magnétique.

Pour réaliser le dispositif selon cette deuxième alternative, on procède avantageusement selon les étapes suivantes :
- étape i/ : fabrication de l'accumulateur en lui-même. Cette étape se fait classiquement avec une fermeture de l'emballage par exemple avec un couvercle soudé au reste du boitier rigide ;
- étape ii/ : mise en place autour de l'accumulateur des deux aimants permanents et deuxième et troisième pièces ferromagnétique, typiquement en fer doux, pour compléter le verrou magnétique.
- étape iii/ : fixation de préférence par sertissage d'un élément conducteur électrique, typiquement en aluminium, à l'emballage de l'accumulateur et aux deuxième et troisième pièces ferromagnétiques, de sorte à assurer la conduction électrique entre l'emballage de l'accumulateur et le busbar B1.

Le sertissage selon cette étape iii/ peut être réalisé avec le fond de l'emballage de l'accumulateur constituant une borne de sortie ou il peut être mis en oeuvre sur la paroi latérale de l'emballage pour assurer une bonne tenue mécanique sur toute la hauteur.

La liaison mécanique peut donc être assurée par cet élément de sertissage. On peut aussi envisager d'autres moyens connus de l'homme de l'art comme du collage, des rivets, etc... Un tel dispositif est particulièrement adapté aux accumulateurs cylindriques à boitier rigide avec l'emballage conducteur électriquement et donc avec un fond formant une borne de sortie. Il peut aussi convenir aux accumulateurs à emballage souple pour lesquels on veille au préalable à agencer au moins un des collecteurs/bornes de sortie sur l'une des faces principales destinée à être en contact électrique avec le fond de la première pièce ferromagnétique.

Selon une variante de réalisation avantageuse, les deuxième et une troisième pièce ferromagnétique ainsi que les deux aimants permanents sont agencés symétriquement autour de l'axe longitudinal (X) de la première pièce ferromagnétique.

Selon un mode de réalisation avantageux, le dispositif est configuré de sorte que, lors d'une défaillance de l'au moins un accumulateur provoquant une surchauffe de ce dernier, au moins un des deux aimants permanents chauffe jusqu'à une température de Curie à partir de laquelle il perd ses propriétés magnétiques, jusqu'à la déconnexion mécanique entre l'au moins un accumulateur et le busbar, ce qui provoque une chute ou un déplacement par gravité ou un déplacement par action d'au moins un moyen mécanique de l'au moins un accumulateur.

Selon un mode de réalisation avantageux, la température de Curie d'au moins un des deux aimants permanents étant choisie pour être comprise entre une valeur proche de 90% de la température d'auto-échauffement (T1) et une valeur proche de 110% de la température d'emballement thermique (T2) des accumulateurs du pack.

En ce qui concerne le phénomène d'emballement thermique, on se reportera à la publication
[1] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

On pourra se reporter aux publications [2] et [3] et plus particulier aux courbes de leur figure 1 respective qui montrent que les propriétés magnétiques de ferrites en sont modifiées en fonction de la température. Plus particulièrement, on voit clairement un effondrement des propriétés magnétiques au passage de la température de Curie.

En outre, ces publications [2] et [3] expliquent deux méthodes de fabrication distinctes pour obtenir des ferrites avec des températures de Curie qui peuvent être ajustées à la fabrication:
- dans la publication [2], le process de fabrication est modifié avec une même composition de ferrite, ce qui fait varier la température de Curie entre 130°C et 250°C. Il est également démontré qu'avec une composition différente de ferrite, que la température de Curie peut être vers 100-110°C ;
- dans la publication [3], les auteurs font varier la composition du matériau. Ils ont pu obtenir des ferrites avec des températures de Curie comprises entre 35 et 65°C. Avec des ajustements de composition, il est très probable de pouvoir pour arriver à des températures de Curie en dessous de 100°C, tout en restant suffisamment élevées pour ne pas être atteinte par l'environnement d'un accumulateur métal-ion.

A titre d'exemple, des températures de Curie qui seraient obtenues dans la gamme 80-150°C, par adaptation du process de fabrication et/ou de la composition des matériaux ferromagnétiques, seraient optimales vis-à-vis de la température d'emballement thermique des accumulateurs du pack, la partie inférieure de la gamme, soit entre 80 et 90°C, probablement optimale pour la minimisation des moyens pilotés par chauffage ou par injection de courant dans le cadre de l'invention.

Chaque aimant permanent peut être un aimant fritté ou un plasto-aimant. Un aimant permanent désigné usuellement sous l'appellation « plasto-aimant », est un matériau composite constitués d'un liant thermoplastique ou thermodurcissable et d'une poudre magnétique. La fabrication de ces plasto-aimants s'effectue par compression à froid (liant thermodurcissable) ou par injection sous pression (liant thermoplastique). L'aimantation peut être réalisée soit pendant le moulage (matériau anisotrope), soit après le moulage. Un plasto-aimant obtenu présente les propriétés des matières plastiques, à savoir la possibilité de lui conférer une forme quelconque, sa mise en forme par moulage, son coût intrinsèquement faible.

L'aimant fritté ou le plasto-aimant est avantageusement à base de terres rares de préférence en samarium-cobalt ou en néodyme-fer-bore, ou ferrite. L'aimant fritté peut également être en alliage aluminium-nickel-cobalt.

Selon un mode de réalisation avantageux, l'adaptateur d'interface comprend en tant que pièce électriquement conductrice, au moins une rondelle ondulée ou éventail électriquement conductrice, agencée de sorte que, dans la configuration de fermeture du circuit magnétique, elle assure le contact électrique entre l'autres des bornes de sortie de l'accumulateur et le busbar.

L'invention a également pour objet, un adaptateur d'interface comprenant :
- une première pièce ferromagnétique d'axe longitudinal (X), la première pièce ferromagnétique étant borgne en formant un logement d'au moins un accumulateur,
- au moins une deuxième et une troisième pièce ferromagnétique agencées étant réparties autour de l'axe longitudinal (X) de la première pièce ferromagnétique,
- une pièce de liaison mécanique et électrique, en matériau amagnétique, solidarisant la première pièce ferromagnétique aux deuxième et troisième pièces ferromagnétiques, en formant entre elles un volume dans lequel sont logés deux aimants permanents répartis autour de l'axe longitudinal (X) avec leurs pôles magnétiques opposés en série magnétique et reliés entre eux par la première pièce ferromagnétique et reliés
chacun d'entre eux respectivement à la deuxième et à la troisième pièce ferromagnétiques en constituant un verrou magnétique .

Selon un mode de réalisation avantageux, l'adaptateur comprend au moins une pièce électriquement conductrice agencée pour assurer un contact électrique d'une part entre l'autre des bornes de sortie de l'accumulateur et le busbar et d'autre part entre les deuxième et troisième pièce ferromagnétique et la quatrième pièce ferromagnétique.

Selon ce mode et une variante de réalisation avantageuse, l'adapteur d'interface comprend en tant que pièce électriquement conductrice, au moins une rondelle ondulée ou éventail électriquement conductrice, la rondelle étant de préférence en alliage de cuivre-phosphore. Avantageusement, les première, deuxième et troisième pièces ferromagnétiques sont en fer doux.

Avantageusement encore, la pièce de liaison mécanique et électrique ou l'élément de liaison électrique est en cuivre ou en aluminium, de préférence soudée à la fois à la première et aux deuxième et troisième pièces ferromagnétiques.

L'invention a encore pour objet un module d'un pack-batterie comprenant :
- un accumulateur de géométrie cylindrique à emballage à boitier rigide ;
- un adapteur d'interface tel que décrit précédemment, la première pièce ferromagnétique étant un cylindre borgne dans laquelle l'accumulateur est logé avec contact entre le fond de son boitier rigide et celui du cylindre borgne, les deuxième et troisième pièces ferromagnétiques étant conformées en segments arqués d'un même cylindre concentrique à l'accumulateur, les aimants permanents étant conformés en segments arqués d'un même cylindre concentrique à l'accumulateur.

L'invention a encore pour objet un module d'un pack-batterie comprenant :
- une pluralité d'accumulateurs de géométrie cylindrique à emballage à boitier rigide ;
- un adapteur d'interface tel que décrit précédemment, la première pièce ferromagnétique étant un cylindre borgne dans laquelle la pluralité d'accumulateurs est logée avec contact entre eux par leur enveloppe latérale et avec contact entre le fond de tous les boîtiers rigides et celui du cylindre borgne, les deuxième et troisième pièces ferromagnétiques étant conformées en segments arqués d'un même cylindre concentrique autour d'un axe de répartition de la pluralité d'accumulateurs, les aimants permanents étant conformés en segments arqués d'un même cylindre concentrique autour d'un axe de répartition de la pluralité d'accumulateurs.

L'invention a encore pour objet un module d'un pack-batterie comprenant :
- un accumulateur de géométrie à empilement à emballage souple ou rigide forme prismatique dont l'une des bornes de sortie est agencée sur l'une des faces principales de l'emballage;
- un adapteur d'interface tel que décrit précédemment, la première pièce ferromagnétique étant un parallélépipède borgne dans laquelle l'accumulateur est logé avec contact entre la borne de sortie sur la face principale de l'emballage et le fond du parallélépipède borgne, les deuxième et troisième pièces ferromagnétiques étant conformées en plaques planes parallèles chacune à une des faces latérales du parallélépipède borgne, les aimants permanents étant conformés plaques planes parallèles chacune à une des faces latérales du parallélépipède borgne.

L'invention a encore pour objet un module d'un pack-batterie comprenant :
- une pluralité d'accumulateurs de géométrie à empilement à emballage souple ou rigide forme prismatique dont l'une des bornes de sortie est agencée sur l'une des faces principales de l'emballage;
- un adapteur d'interface tel que décrit précédemment, la première pièce ferromagnétique étant un parallélépipède borgne dans laquelle les accumulateurs sont logés avec contact entre la borne de sortie sur la face principale d'au moins un des emballages et le fond du parallélépipède borgne, les deuxième et troisième pièces ferromagnétiques étant conformées en plaques planes parallèles chacune à une des faces latérale du parallélépipède borgne, les aimants permanents étant conformés plaques planes parallèles chacune à une des faces latérales du parallélépipède borgne.

L'invention a encore pour objet un accumulateur (A) comprenant :
- un boitier d'axe longitudinal (X) constituant une première pièce ferromagnétique;
- au moins une deuxième et une troisième pièce ferromagnétique agencées en étant réparties autour de l'axe longitudinal (X) de la première pièce ferromagnétique,
- au moins un élément de liaison mécanique et électrique, en matériau amagnétique, solidarisant la première pièce ferromagnétique aux deuxième et troisième pièces ferromagnétiques, en formant entre elles un volume dans lequel sont logés deux aimants permanents répartis autour de l'axe longitudinal (X) avec leurs pôles magnétiques opposés en série magnétique et reliés entre eux par la première pièce ferromagnétique et reliés chacun d'entre eux respectivement à la deuxième et à la troisième pièce ferromagnétique en constituant un verrou magnétique.

Selon une variante de réalisation avantageuse, l'élément élément de liaison mécanique et électrique est conformé autour des deuxième et pièces ferromagnétiques, de préférence en remplissant le(s) volume(s) libre(s) entre elle(s) et entre aimants permanents. Cette variante permet d'assurer une bonne tenue mécanique de l'ensemble sur toute la hauteur de l'accumulateur.

Avantageusement, l'élément élément de liaison mécanique et électrique est serti sur le boitier de l'accumulateur en maintenant les deuxième et troisième pièces ferromagnétiques et les deux aimants permanents.

L'invention a enfin pour objet un module d'un pack-batterie comprenant une pluralité d'accumulateurs de géométrie cylindrique à emballage à boitier rigide comme ci-dessus. Chaque accumulateur peut être un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] est une vue schématique en perspective éclatée montrant les différents éléments d'un accumulateur lithium-ion.
[Fig 2] est une vue de face montrant un accumulateur lithium-ion avec son emballage souple selon l'état de l'art.
[Fig 3] est une vue en perspective d'un accumulateur lithium-ion selon l'état de l'art avec son emballage rigide constitué d'un boitier de forme cylindrique.
[Fig 4] est une vue en en perspective d'un accumulateur lithium-ion selon l'état de l'art avec son emballage rigide constitué d'un boitier de forme prismatique.
[Fig 5] est une vue en perspective d'un assemblage au moyen de busbars d'accumulateurs lithium-ion selon l'état de l'art, formant un pack-batterie.
[Fig 6A] la figure 6A est une vue en coupe longitudinale illustrant la déconnexion magnétique d'un dispositif, destiné à assurer la connexion/déconnexion mécanique et électrique entre une borne de sortie d'un accumulateur à faible courant, typiquement inférieur à 1A et un busbar.
[Fig 6B] la figure 6B est une vue en coupe longitudinale illustrant la connexion magnétique d'un dispositif, destiné à assurer la connexion/déconnexion mécanique et électrique entre une borne de sortie d'un accumulateur à faible courant, typiquement inférieur à 1A et un busbar.
[Fig 7A] la figure 7A est une vue en coupe longitudinale illustrant la déconnexion magnétique d'un dispositif, destiné à assurer la déconnexion mécanique et électrique entre une borne de sortie d'un accumulateur à courant élevé, typiquement supérieur à 1A et un busbar.
[Fig 7B] la figure 7B est une vue en coupe longitudinale illustrant la connexion magnétique d'un dispositif, destiné à assurer la connexion mécanique et électrique entre une borne de sortie d'un accumulateur à courant élevé, typiquement supérieur à 1A et un busbar.
[Fig 8] la figure 8 est une vue de face d'une rondelle ondulée électriquement conductrice assurant le contact électrique entre busbar et pièce électriquement conductrice soit de la borne de sortie soit reliée à celle-ci, dans un dispositif selon les figures 7A et 7B.
[Fig 8A] la figure 8A est une vue de côté d'une rondelle ondulée électriquement conductrice assurant le contact électrique entre busbar et pièce électriquement conductrice soit de la borne de sortie soit reliée à celle-ci, dans un dispositif selon les figures 7A et 7B.
[Fig 9] la figure 9 est une vue schématique en coupe longitudinale d'une variante du dispositif selon les figures 7A et 7B.
[Fig 10] la figure 10 est une vue schématique en coupe longitudinale d'un mode de réalisation avantageux du dispositif selon les figures 7A et 7B, selon lequel un pilotage de la connexion/déconnexion entre pièces magnétiques par bobine est possible.
[Fig 11] la figure 11 est une vue schématique en coupe longitudinale d'une variante du mode de réalisation avantageux du dispositif selon la figure 10.
[Fig 12] la figure 12 est une vue schématique en coupe longitudinale d'un mode de réalisation avantageux du dispositif qui est une représentation concrète du mode des figures 7A et 7B.
[Fig 13] la figure 13 est une vue schématique en coupe longitudinale d'un mode de réalisation avantageux du dispositif qui est une alternative à celui de la figure 10.
[Fig 14] la figure 14 est une variante de la figure 12.
[Fig 15] la figure 15 est une variante de la figure 13.
[Fig 16] la figure 16 est une vue schématique en coupe longitudinale d'un mode de réalisation avantageux d'un dispositif à courant de puissance, avec intégration d'une partie de ce dernier dans une traversée formant borne de sortie d'un accumulateur métal-ion.
[Fig 17] la figure 17 est une vue schématique en perspective de la pièce mâle avec son capot d'obturation d'une traversée selon la figure 16.
[Fig 18] la figure 18 est une vue schématique en perspective d'une variante de réalisation d'une pièce mâle d'une traversée.
[Fig 19] la figure 19 est une vue schématique en perspective d'un accumulateur métal-ion de format prismatique intégrant deux bornes de sortie à verrou magnétique sur le couvercle du boitier d'accumulateur.
[Fig 20] la figure 20 est une vue schématique en perspective d'un accumulateur métal-ion de format cylindrique intégrant deux bornes de sortie à verrou magnétique, l'une sur le couvercle du boitier d'accumulateur, l'autre sur le fond.
[Fig 21] la figure 21 est une vue schématique de côté et partiellement en coupe d'un accumulateur métal-ion selon la figure 20, avec les pièces ferromagnétiques insérées dans des busbars formant des plaques de fermeture du circuit avec les verrous magnétiques intégrés dans les bornes de sortie de l'accumulateur.
[Fig 22] la figure 22 est une vue schématique en perspective et en éclaté partiel d'un accumulateur métal-ion existant de format prismatique avec un adaptateur d'interface intégrant des verrous magnétiques.
[Fig 23] la figure 23 est une vue schématique en perspective de l'accumulateur avec son adaptateur d'interface selon la figure 22, dans sa configuration installée sur le boitier de l'accumulateur.
[Fig 24] la figure 24 est une vue schématique en coupe longitudinale partielle d'un accumulateur et son adaptateur d'interface selon les figures 22 et 23 en regard de pièces ferromagnétiques insérées dans des busbars formant des plaques de fermeture du circuit avec les verrous magnétiques intégrés dans l'adaptateur.
[Fig 25] la figure 25 est une vue schématique en perspective et en éclaté d'un autre adaptateur d'interface intégrant un verrou magnétique.
[Fig 26] la figure 26 est une vue schématique en perspective et en éclaté partiel d'un accumulateur métal-ion existant de format prismatique avec un adaptateur d'interface selon la figure 25 à fixer, emmancher ou à visser autour d'une borne de sortie de l'accumulateur.;
[Fig 27] la figure 27 est une vue schématique en coupe longitudinale partielle d'une borne de sortie d'un accumulateur autour de laquelle est emmanché un adaptateur d'interface en regard d'une pièce ferromagnétique insérées dans un busbar formant une plaque de fermeture du circuit avec le verrou magnétique intégré dans l'adaptateur.
[Fig 28] la figure 28 est une vue schématique en coupe longitudinale d'un dispositif à shunt magnétique à lame flexible conforme à l'invention, destiné à assurer le shunt entre deux busbars ; la lame étant fixée avec connexion électrique à l'un des busbars.
[Fig 29] la figure 29 est une vue schématique en coupe longitudinale d'un mode de réalisation avantageux du dispositif selon la figure 28, selon lequel le shunt est dupliqué, mais avec une fixation de chaque lame flexible réalisée sur une partie isolante;
[Fig 30] la figure 30 est une vue schématique en coupe longitudinale d'une variante du dispositif de shunt magnétique selon la figure 29.
[Fig 31] la figure 31 est une vue en coupe longitudinale illustrant la connexion magnétique d'un dispositif selon l'invention, destiné à assurer la connexion/déconnexion mécanique et électrique entre un accumulateur et un busbar, le dispositif comprenant un autre adaptateur d'interface intégrant un verrou magnétique conforme à l'invention, le verrou logeant intégralement l'accumulateur.
[Fig 31A] la figure 31A est une vue de dessus du verrou magnétique selon la figure 31.
[Fig 32] la figure 32 reprend la figure 31 en indiquant la circulation du flux magnétique au sein du dispositif.
[Fig 32A] la figure 32A reprend la figure 31A en indiquant la circulation du flux magnétique au sein du dispositif.
[Fig 32B] la figure 32B est une vue de dessus de la figure 31 en indiquant la circulation du flux magnétique autour du busbar B1.
[Fig 33] la figure 33 reprend la figure 31 en indiquant la circulation du courant de puissance au sein du dispositif.
[Fig 33A] la figure 33A reprend la figure 31A en indiquant la circulation du courant de puissance au sein du dispositif.
[Fig 34] la figure 34 est une variante du dispositif selon la figure 31.
[Fig 35] la figure 35 est une vue en coupe longitudinale illustrant une première étape de réalisation d'une alternative selon l'invention selon laquelle le boitier de l'accumulateur constitue en tant que tel une partie d'un verrou magnétique conforme à l'invention.
[Fig 35A] la figure 35A est une vue de dessus de la figure 35.
[Fig 36] la figure 36 est une vue en coupe longitudinale illustrant une deuxième étape de réalisation d'une alternative selon l'invention selon laquelle le boitier de l'accumulateur constitue en tant que tel une partie d'un verrou magnétique conforme à l'invention.
[Fig 36A] la figure 36A est une vue de dessus de la figure 36.
[Fig 37] la figure 37 est une vue en coupe longitudinale illustrant une troisième étape de réalisation d'une alternative selon l'invention selon laquelle le boitier de l'accumulateur constitue en tant que tel une partie d'un verrou magnétique conforme à l'invention.
[Fig 37A] la figure 37A est une vue de dessus de la figure 37.

### Description détaillée

Les figures 1 à 5 sont relatives à des exemples différents d'accumulateur Li-ion, d'emballages souples et boitiers d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 33A.

Dans l'ensemble de la présente demande, les termes « inférieur », « supérieur », « bas », « haut », « dessous » et « dessus » sont à comprendre par référence par rapport à un boitier d'accumulateur Li-ion positionné à la verticale avec son couvercle sur le dessus et une traversée formant borne de sortie faisant saillie à l'extérieur du boitier vers le haut.

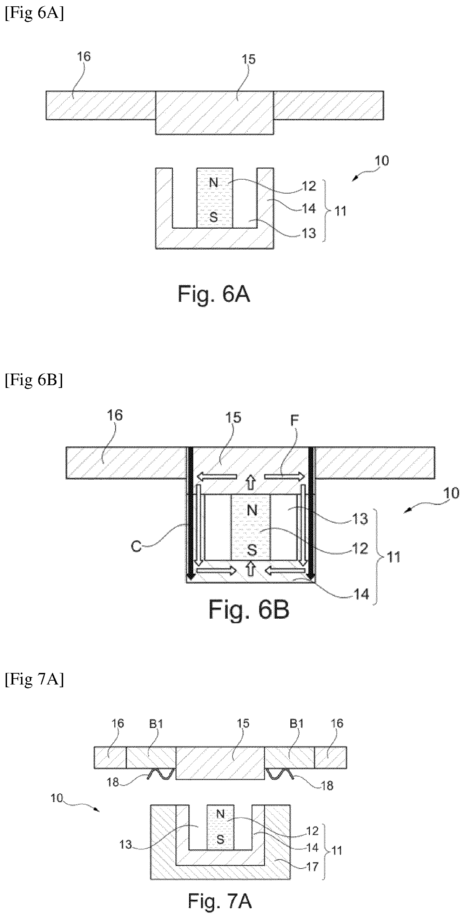

On a représenté en figures 6A et 6B un exemple de dispositif de connexion/déconnexion magnétique 10, destiné à assurer la connexion/déconnexion mécanique et électrique entre une borne de sortie d'un accumulateur métal-ion à faible courant et un busbar.

Le dispositif 10 comprend ici un verrou magnétique 11 comprenant un aimant permanent 12, par exemple en néodyme cobalt, logé à l'intérieur d'une cavité 13 formée dans une pièce ferromagnétique 14, par exemple en fer doux. Cette pièce ferromagnétique est reliée électriquement à la borne de sortie non représentée ici.

Une autre pièce ferromagnétique 15, également en fer doux, est insérée dans un substrat isolant 16 intégrant un busbar non représenté ici, et en contact avec sa partie électriquement conductrice. Cette autre plaque 15 forme une plaque de fermeture d'un circuit magnétique avec le verrou magnétique 11.

Le circuit magnétique fermé est illustré en figure 6B : le passage du courant C se fait au travers des pièces ferromagnétiques 14, 15 et le flux magnétique F généré par l'aimant permanent 12 circule en boucle fermée à la fois dans l'aimant 12 et dans les pièces ferromagnétiques 14, 15.

Ainsi, en configuration fermée, la plaque de fermeture 15 vient refermer la pièce ferromagnétique 14 pour permettre une bonne circulation du flux magnétique F généré par l'aimant. Ce circuit magnétique présente une bonne perméabilité magnétique et sa fermeture permet un effort important entre les deux sous-ensembles, et donc garantit une connexion mécanique entre la borne de sortie et le busbar tout en permettant le contact électrique entre eux.

Dans l'exemple illustré, la plaque de fermeture 15 est une plaque pleine. On peut tout aussi bien envisager une plaque de fermeture sous la forme d'une rondelle ferromagnétique qui donc bien qu'évidée intérieurement vient fermer un circuit magnétique avec la pièce ferromagnétique 14.

Le courant électrique de puissance n'étant pas très intense, il peut passer à travers le matériau ferromagnétique des pièces 14, 15 qui assure dans cette configuration la conduction électrique et le contact électrique entre les deux sous-ensembles du dispositif. Ici, la plaque de fermeture 15 doit être en contact électrique direct avec la pièce ferromagnétique inférieure 14 pour permettre une conduction électrique du courant de puissance.

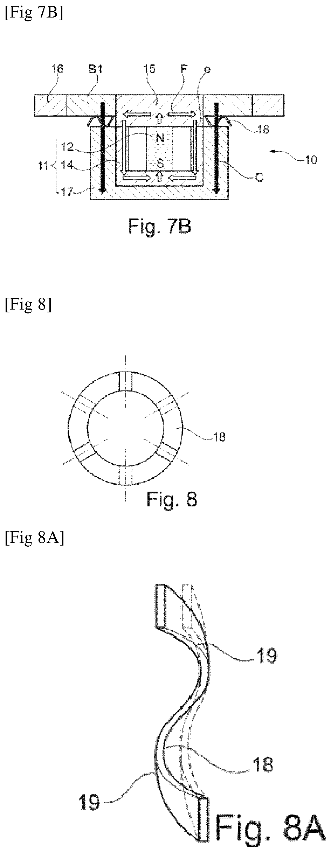

Les figures 7A et 7B illustrent un dispositif de connexion/déconnexion magnétique pour des courants de puissance élevés, typiquement supérieurs à 1A. Dans ce cas, les pièces de conduction électrique qui assurent le passage du courant de puissance et la qualité du contact électrique deviennent des paramètres importants.

Des pièces électriquement conductrices sont donc ajoutées. Tout d'abord, la pièce ferromagnétique du haut 15 est directement insérée dans le busbar électriquement conducteur B1. La pièce ferromagnétique 15, typiquement en fer doux peut être insérée par emmanchement en force ou vissage ou rivetage au busbar B1, typiquement en cuivre. Ensuite, la pièce ferromagnétique du bas 14 est fixée typiquement par emmanchement dans la cavité d'une pièce électriquement conductrice 17. Ces deux pièces électriquement conductrices B1, 17 sont des conducteurs électriques de bonne qualité, typiquement en cuivre ou aluminium. La résistivité de ces conducteurs étant très inférieure à celui des matériaux ferromagnétiques des pièces 14, 15, notamment le fer doux, la majeure partie du courant de puissance va passer à travers ces conducteurs B1, 17.

Sur la figure 7B, le circuit magnétique est fermé : la circulation du courant de puissance C passe à travers les pièces conductrices B1, 17. Le flux magnétique F de l'aimant permanent est refermé par le circuit magnétique pour maximiser les efforts magnétiques.

Sur cette figure 7B est montrée la présence d'un léger entrefer e entre pièces ferromagnétiques 14, 15, qui certes diminue très légèrement la force de connexion mais permet avantageusement de laisser un jeu fonctionnel entre ces pièces.

En outre, une rondelle éventail ou ondulée 18, électriquement conductrice, est agencée autour de la pièce ferromagnétique 15 du haut. Dans l'exemple illustré, la pièce ferromagnétique 15 est en saillie par rapport au busbar B1 et la rondelle éventail 18 est agencée autour de la partie en saillie de la pièce 15. De préférence, cette rondelle 18 est en alliage cuivre-phosphore.

Cette rondelle 18 permet de garantir un bon contact électrique En effet, un bon contact électrique nécessite une surface de contact importante et un effort pour compenser les irrégularités des surfaces. La rondelle éventail 18 permet d'établir plusieurs points de contact bien définis en concentrant l'effort et en compensant les jeux mécaniques.

Les saillies 19 de la rondelle 18 permettent d'établir plusieurs points de contact parallèles entre eux, ce qui réduit la résistance électrique globale entre les pièces conductrices B1, 17. Un exemple de forme avantageuse de rondelle éventail conforme à l'invention 18 est montré aux figures 8 et 8A.

Des exemples de dimensionnement de rondelles éventails 18 selon les figures 8 et 8A sont indiqués dans le tableau 1 ci-dessous. Les rondelles sont présentées ici circulaires mais d'autres formes peuvent être envisagées, typiquement carrée ou rectangulaire, selon la forme de la borne.

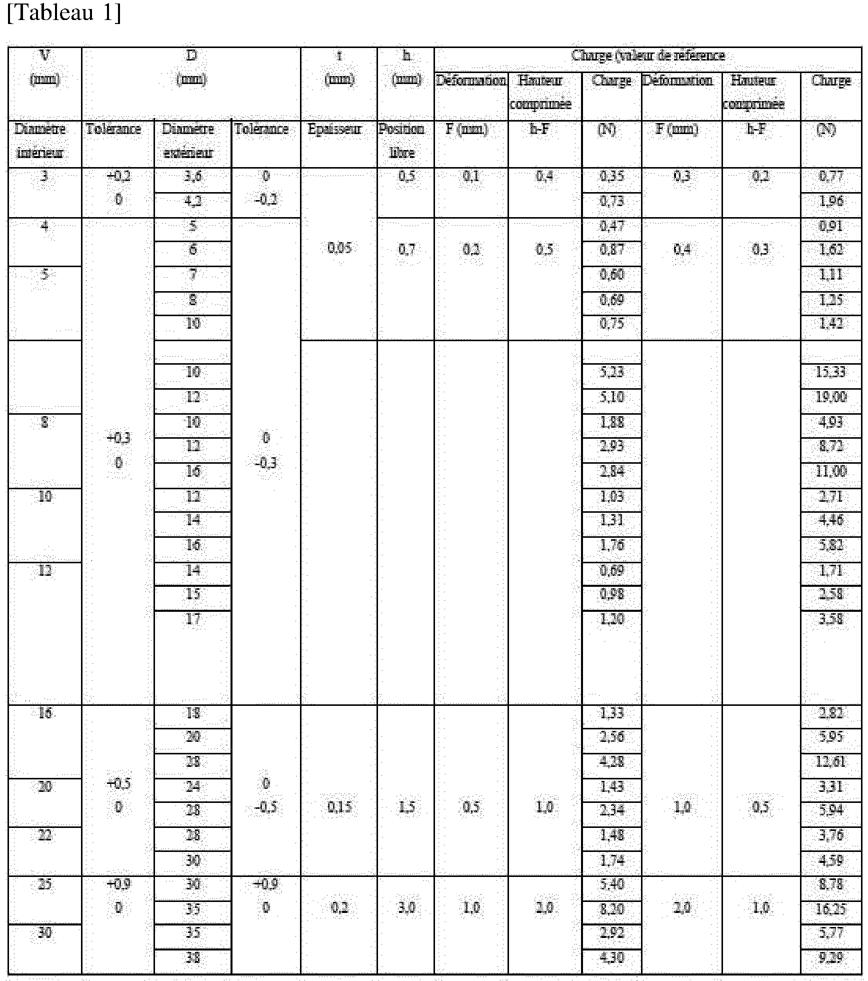

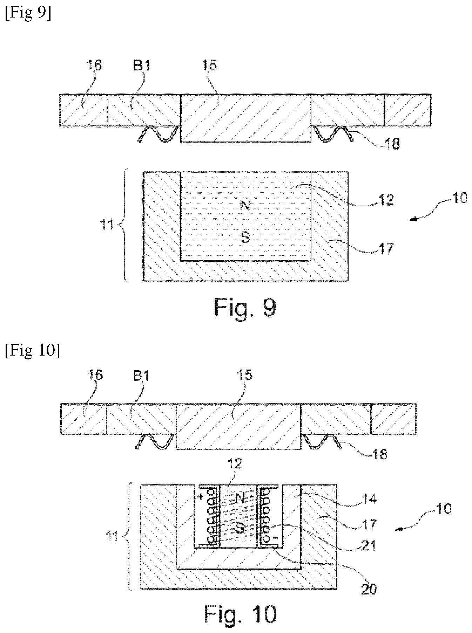

Une variante du dispositif 10 est montrée en figure 9: la pièce ferromagnétique 14 du dessous précédemment décrite est supprimée. Le flux magnétique F de l'aimant permanent 12 se referme ici dans l'air, ce qui implique un dimensionnement plus important de ce dernier pour exercer le même effort de connexion que celui des figures 7A et 7B.

L'aimant permanent peut par exemple occuper toute la cavité de la pièce conductrice 17, comme montré en figure 9.

Tous les dispositifs de connexion 10 qui viennent d'être décrits ne sont pas déconnectables sans intervention de l'extérieur et donc ne permettent pas un démontage entre borne de sortie d'accumulateur et busbar sous tension/courant.

Pour résoudre ce problème, le dispositif 10 est modifié pour être piloté par alimentation d'un courant, comme montré en figure 10.

Ici, un mandrin électriquement isolant 20 entoure l'aimant permanent 12, et un fil électriquement conducteur formant une bobine 21 est enroulée autour du mandrin isolant. Le mandrin 20 peut par exemple être en plastique isolant, typiquement un thermoplastique du type polyéthylène, et le fil de bobine en cuivre.

Le dispositif 10 est ainsi configuré de sorte que :
i/ lorsque la bobine 21 n'est pas initialement alimentée électriquement, la force magnétique d'attraction de l'aimant permanent 12 sur la plaque de fermeture 15, dans la configuration du circuit magnétique fermé, maintient la connexion mécanique entre busbar B1 et pièce conductrice 17, et donc entre busbar B1 et la borne de sortie. Le contact électrique entre eux est réalisé par le biais de la rondelle 18.
ii/ lorsque la bobine 21 est alimentée électriquement dans un sens donné, elle produit un champ magnétique opposé à celui de l'aimant permanent 12, jusqu'à annuler la force d'attraction de l'aimant permanent, ce qui provoque la déconnexion mécanique entre busbar B1 et pièce conductrice 17, soit busbar B1 et borne de sortie. Le contact électrique entre eux est supprimé.

Ce mode de réalisation est également avantageux car il est possible de renforcer temporairement l'effort d'attraction de l'aimant permanent 12 en injectant dans la bobine un courant dans le sens opposé à celui de la phase ii/, ce qui crée un champ magnétique dans le même sens que celui de l'aimant permanent 12. Ainsi, on peut piloter plus précisément la fermeture entre pièces conductrices B1, 17 ou simplement la faciliter.

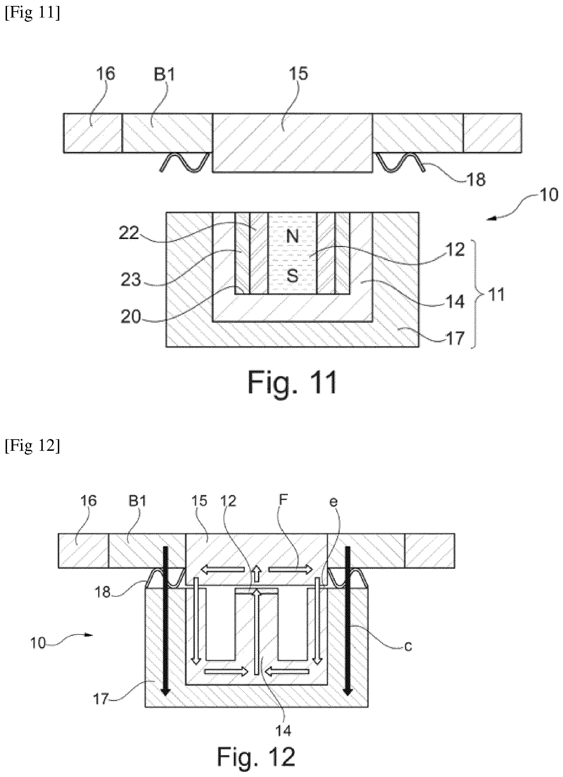

En lieu et place d'un bobine 21, on peut implanter une résistance chauffante électrique 22 comme montré en figure 11.

Plus précisément, cette résistance chauffante 22 entoure par exemple l'aimant permanent 12 et peut être entouré d'un isolant thermique 23, qui a pour fonction de concentrer vers l'aimant permanent 12 la chaleur produite par la résistance chauffante 22. De préférence, l'isolant thermique 23 peut être maintenu par un mandrin isolant électrique 20 comme celui décrit ci-avant. D'autres configurations géométriques peuvent être envisagées à condition de chauffer suffisamment l'aimant.

Un aimant permanent 12 est sensible à la température et perd ses propriétés magnétiques (devient amagnétique) au-delà d'une température critique appelée température de Curie. Cette température dépend des matériaux choisis pour l'aimant permanent et peut varier de 100°C à plus de 250°C. Dans le cadre de l'invention, la température de Curie de l'aimant permanent est choisie pour être comprise entre une valeur proche de 90% de la température d'auto-échauffement (T1) et une valeur proche de 110% de la température d'emballement thermique (T2) des accumulateurs du pack.

Ainsi, lorsqu'elle va être alimentée électriquement, la résistance chauffante 22 va chauffer localement l'aimant permanent 12 dimensionné pour que sa température dépasse la température de Curie.

L'aimant 12 n'exerçant plus de force d'attraction, la déconnexion mécanique et électrique a lieu entre pièces conductrices B1, 17. La démagnétisation de l'aimant permanent est définitive et donc la déconnexion selon cette variante l'est aussi.

La consommation électrique requise par l'alimentation de la bobine 21 ou la résistance chauffante électrique 22 d'un dispositif 10 est très faible, ce qui est avantageux pour un accumulateur métal-ion qui est par nature électriquement autonome.

En lieu et place d'une résistance chauffante électrique 22, on peut chauffer l'aimant par l'accumulateur lui-même. En effet, dans le cas d'un accumulateur métal-ion, sa température à coeur en emballement thermique, est compatible avec une température de démagnétisation d'un aimant permanent. Ainsi, la déconnexion électrique pourra être obtenue de manière passive grâce à l'emballement thermique de l'accumulateur défaillant.

Plusieurs types d'aimants permanents 12 existent et sont utilisables pour les dispositifs décrits. Les aimants en ferrite ou samarium cobalt sont très performants (fort champ coercitif) et sont ceux utilisés dans les dispositifs décrits précédemment. Ces aimants à hautes performances (potentiellement coûteux) sont nécessaires dans le design d'un dispositif selon l'invention car l'aimant permanent est de faible volume.

D'ailleurs les géométries montrées dans les dispositifs précédemment décrits sont schématiques à titre illustratif.

En pratique, un aimant permanent 12 doit être avantageusement être très fin : en effet, il se comporte comme un entrefer dans le circuit magnétique C, et cet entrefer doit être le plus faible possible pour que le flux et donc l'effort soit maximal. Également, le diamètre de l'aimant permanent 12 est limité par la taille de dispositif réduit.

On a représenté en figure 12, un type d'aimant permanent 12 en ferrite ou samarium cobalt tel qu'il peut être réalisé concrètement sous la forme d'un disque et agencé dans un dispositif selon l'invention, destiné au passage de forts courants. Sur cette figure 12, on voit que la pièce ferromagnétique à cavité est remplacée par une pièce ferromagnétique 14 de forme adaptée, i.e. avec une paroi centrale en extrémité supérieure de laquelle l'aimant 12 sous la forme d'un disque est supporté. La pièce ferromagnétique est de préférence évidée entre sa paroi centrale et sa paroi périphérique vide pour avoir un gain de masse.

A titre d'exemple, les inventeurs ont réalisé un prototype d'un aimant 12 en samarium-cobalt sous la forme d'un disque d' 1mm d'épaisseur et de 10mm de diamètre, destiné à une borne de sortie en tant que dispositif de connexion/déconnexion d'environ

20 mm de diamètre et 20 mm de hauteur. L'induction d'un tel aimant est de 1,1Tesla et l'effort de connexion obtenu avec cet aimant 12 est de 18N.

A titre d'exemple comparatif, par calcul, un aimant permanent 12 de 10mm de diamètre et 10 mm de hauteur génère seulement un effort de connexion de 0,5N.

Ces aimants permanents frittés 12, à hautes performances, conviennent parfaitement aux applications recherchées dans le cadre de l'invention.

En revanche, ils peuvent être coûteux et les mises en forme qu'il est possible d'obtenir avec les matériaux ferromagnétiques frittés sont limitées à des formes simples, comme plaques, disques, anneaux de petite taille.

C'est pourquoi les inventeurs ont pensé à agencer un plasto-aimant en lieu et place d'un aimant permanent fritté en ferrite ou en samarium-cobalt.

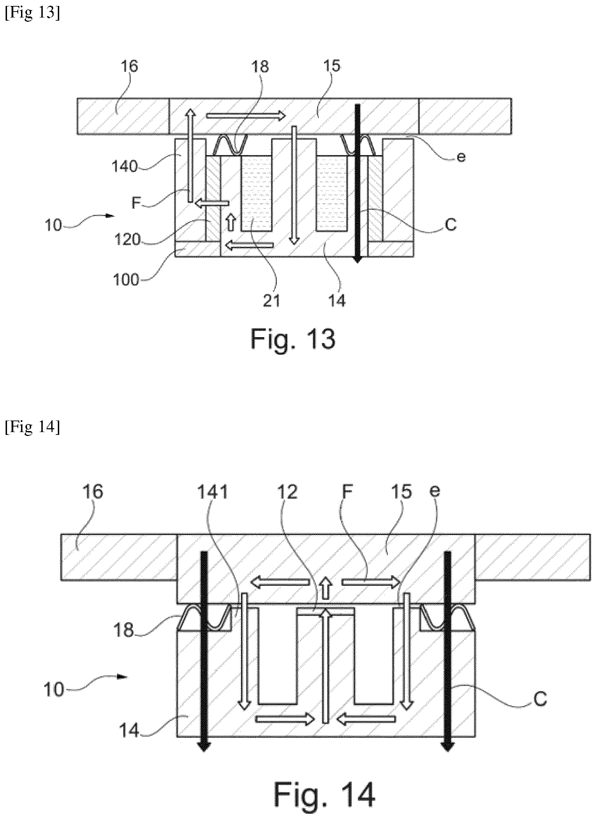

Un exemple d'agencement de plasto-aimant dans un dispositif de connexion 10 selon l'invention est montré en figure 13.

Sur cette figure 13, le plasto-aimant 120 de forme annulaire qui est agencé sur la périphérie du contact avec le circuit magnétique F réalisé avec deux pièces ferromagnétiques distinctes 14, 140 qui forment entre elle le volume annulaire dans lequel est logé le plasto-aimant 120. Le plasto-aimant 120 a donc la forme d'un cylindre de faible épaisseur et de hauteur importante.

Une pièce de liaison mécanique 100 peut être montée en force à l'aide d'une presse ou être soudée à l'interface entre les deux pièces ferromagnétiques 14, 140. On veille à s'assurer de la compatibilité entre les matériaux des différentes pièces lors de leur assemblage.

Comme visible sur cette figure 13, le flux magnétique F, est horizontal au niveau du plasto-aimant 120.

Un tel plasto-aimant 120 est avantageux car il permet d'avoir un entrefer de faible tout en bénéficiant d'un volume annulaire conséquent, et donc d'autoriser cette solution d'aimant moins performant que les aimants frittés 12.

On a représenté en figure 14, un mode avantageux de réalisation de la pièce ferromagnétique 14 avec un aimant 12 sous la forme d'un disque comme en figure 12.

La pièce ferromagnétique 14 est réalisée avec un épaulement pour obtenir une différence de hauteur 141 qui permet à la fois d'obtenir une zone de contact magnétique et d'établir un bon contact électrique par l'intermédiaire d'une rondelle élastique 18 entre les deux pièces 14, 15 de la carcasse magnétique, c'est-à-dire sur le circuit magnétique C externe. L'agencement de la rondelle 18 permet de ne pas ajouter d'entrefer dans le circuit magnétique global ce qui serait préjudiciable à la tenue mécanique (réduction de l'effort). La rondelle élastique 18 permet dans cette configuration un contact électrique ponctuel avec une pression de contact suffisante. La rondelle 18 peut être revêtue d'un ou plusieurs matériaux de contact adapté, typiquement à base d'un revêtement en Argent, pour améliorer la résistance de contact et éviter l'oxydation.

L'aimant permanent 12 dans la configuration de la figure 14 est de préférence un aimant fritté.

Ainsi, la configuration des figures 13 et 14 est avantageuse car le circuit magnétique constitué par les pièces ferromagnétiques 14, 15, typiquement en fer doux est fortement conducteur électrique et peut faire passer un courant de forte intensité à travers le dispositif, par l'intermédiaire de la rondelle élastique conductrice 18. Cela permet donc d'assurer une bonne conduction électrique entre la plaque de fermeture et le circuit magnétique.

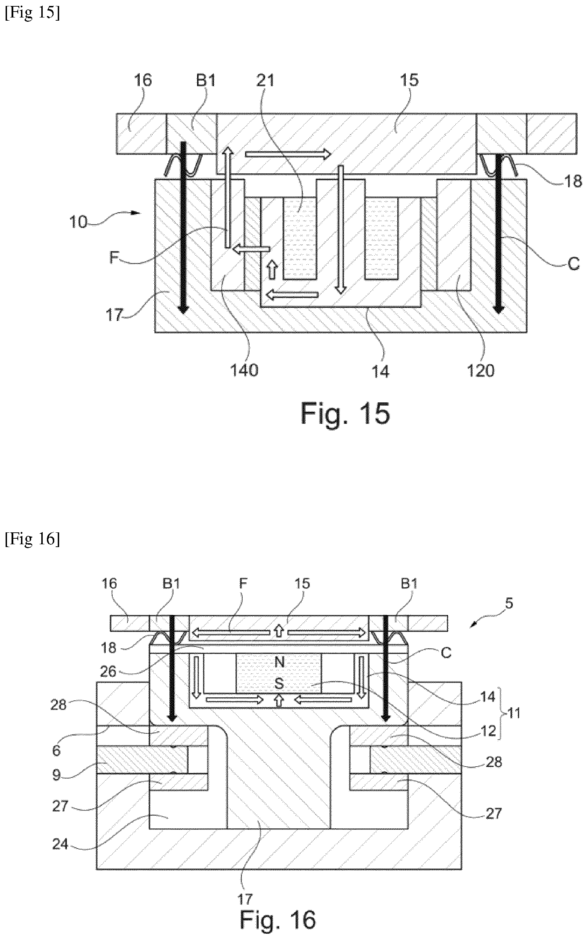

On peut aussi envisager de faire passer un fort courant par une carcasse amagnétique comme montré en figure 15.

Dans cette figure 15, le courant ne passe plus à travers les pièces ferromagnétiques 14, 15 mais par l'intermédiaire de la carcasse amagnétique constituée par les pièces 17, B 1 qui sont en cuivre par exemple.

Il est à noter que dans cette configuration de la figure 15, la pièce de liaison mécanique 100 peut être supprimée car la pièce de conduction électrique 17 maintient mécaniquement les différents éléments dans sa cavité.

Les dispositifs de connexion/déconnexion magnétique qui viennent d'être décrits peuvent être intégrés pour partie directement dans les bornes de sortie d'accumulateur.

Cette intégration a pour but de réaliser un verrou magnétique entre au moins une borne de sortie d' accumulateur et un busbar, le verrou comprenant un aimant permanent et une bobine de commande coopérant avec une plaque de fermeture magnétique.

Comme cela ressort ci-après, un verrou magnétique est intégré dans une borne de sortie et la plaque de fermeture est du côté du busbar. A l'exception des configurations où l'on cherche un shunt électrique de l'accumulateur, on peut tout aussi bien envisager d'intégrer le verrou du côté du busbar et la plaque de fermeture magnétique dans la borne de sortie d'un accumulateur.

Un exemple de réalisation de borne de sortie 5 selon l'invention formée par une traversée est montrée en figure 16.

La traversée 5 est réalisée à travers un orifice débouchant de part et d'autre du couvercle 9 de boitier 6 d'un accumulateur A, qui comporte deux faces opposées.

La traversée 5 comprend une pièce femelle électriquement conductrice 24, et une pièce mâle électriquement conductrice 17 qui comprend la cavité 25 dans laquelle l'aimant permanent 12 est logé et qui est fermée par un capot d'obturation 26 également électriquement conducteur.

La cavité 25 loge également la pièce ferromagnétique 14 qui complète ici l'aimant permanent 12 pour former le verrou magnétique.

Une portion de la pièce mâle 17 est ajustée serrée dans un trou borgne de la pièce femelle 24.

Deux rondelles électriquement isolantes 27, 28 comportent chacune une portion d'appui en appui surfacique avec pression contre l'une des faces du couvercle 9 et une portion de guidage en saillie par rapport à la portion d'appui et en contact avec le bord de l'orifice. En outre, chacune des pièces conductrices 17, 24 comporte une portion d'appui en appui surfacique avec pression contre une portion d'appui des rondelles 27.

Comme montré sur la figure 16, en configuration fermée du circuit magnétique, le flux magnétique F circule en boucle dans la borne 5 au travers de la pièce ferromagnétique 14 et de la pièce ferromagnétique 15 insérée dans le busbar B 1, ce qui garantit la connexion mécanique entre borne 5 et busbar B1.

Simultanément, la circulation du courant de puissance C se fait depuis le busbar B1 à travers le capot 26 et la pièce mâle 17 de la borne par le biais de la rondelle éventail 18.

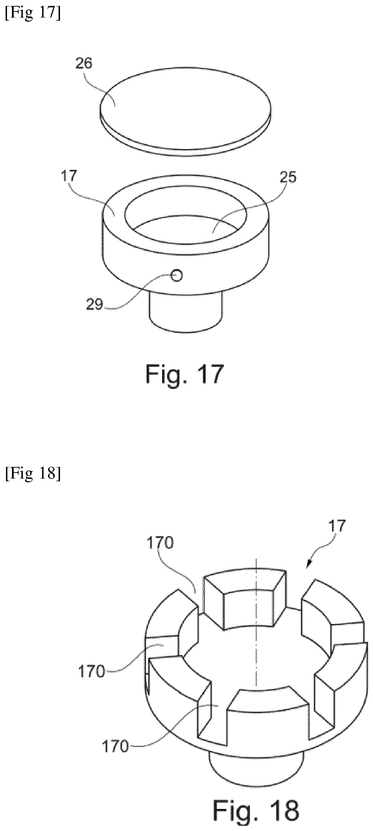

La figure 17 montre en détail la pièce mâle conductrice 17 dont la cavité 25 loge l'aimant permanent 12 et qui est fermée par le capot 26, notamment fixé par soudage. Le capot 26 est de préférence dans le même matériau que la pièce mâle 17. L'épaisseur de ce capot est à définir en fonction de l'entrefer souhaité vis à vis de l'application.

Bien que non représentée, une bobine 21 ou une résistance électrique chauffante 22 pour la déconnexion magnétique de la borne 5 peut être logée dans la cavité 25.

Un orifice traversant 29 prévu dans la pièce mâle 17 permet de faire passer un fil électrique d'alimentation d'une telle bobine ou résistance électrique chauffante.

En lieu et place d'une pièce mâle conductrice 17 avec une cavité quasi-borgne 25 à l'exception d'un trou traversant 29 comme illustré en figure 17, on peut réaliser la pièce mâle conductrice 17, avec une ou plusieurs fentes 170 sur sa périphérie comme montré en figure 18. Cette variante est avantageuse car d'une part elle permet un gain de poids pour la pièce 17 et d'autre part elle laisse la possibilité de faire passer le fil d'alimentation de la bobine ou résistance électrique chauffante en plusieurs endroits.

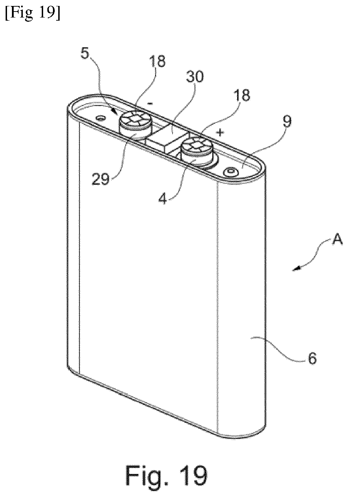

On a représenté en figure 19, un accumulateur métal-ion A de format prismatique dont les deux bornes de sortie 4, 5 agencées toutes deux sur le couvercle 9 du boitier 6, intègrent le verrou magnétique à aimant permanent 12. De préférence, chaque verrou magnétique comprend une pièce ferromagnétique 14 et une bobine 21 ou résistance électrique chauffante 22 pour la déconnexion éventuelle de l'accumulateur de busbars B 1 et/ou B2.

Ainsi, en configuration fermée de chacun de leur circuit magnétique, chacune des deux bornes de sortie 4, 5 est verrouillée magnétiquement respectivement à un busbar B 1 et/ou B2.

Comme visible sur cette figure 19, les rondelles éventail 18 peuvent être montées directement sur les bornes de sortie 4, 5.

L'alimentation électrique d'une bobine 21 ou résistance chauffante 22, en vue de la déconnexion magnétique entre un accumulateur A et les busbars B 1 et/ou B2, peut être réalisée à partir de la puissance de l'accumulateur A ou d'un autre accumulateur d'un pack-batterie, par un BMS qui permet notamment de détecter au préalable la défaillance de l'accumulateur.

Comme montré en figure 19, un tel BMS 30 peut être fixé directement sur le couvercle 9 du boitier et alimenté directement par des fils passant dans l'orifice traversant 29 des pièces mâles 17 des bornes 4, 5.

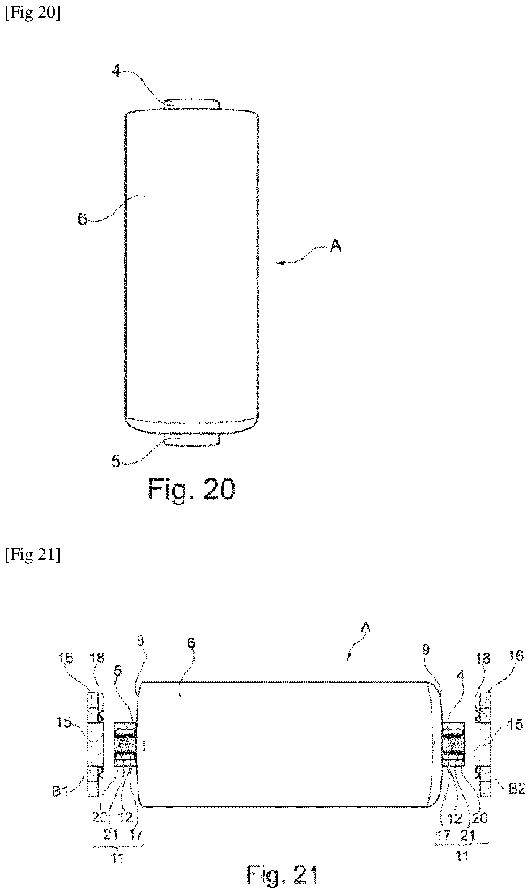

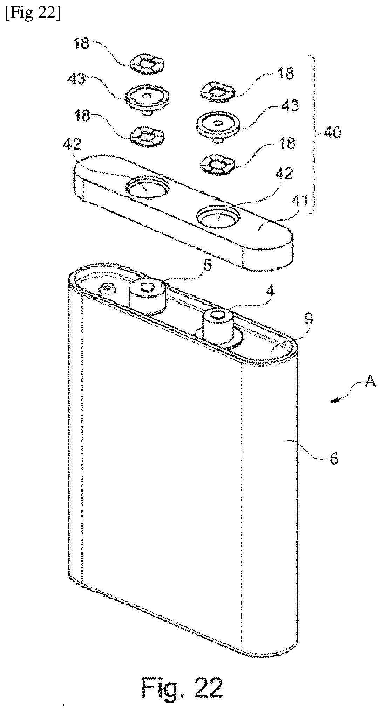

Les figures 20 et 21 illustrent un accumulateur métal-ion A de format cylindrique avec les deux bornes de sortie 4, 5 qui intègrent le verrou magnétique à aimant permanent 12, l'une étant agencée sur le couvercle 9 du boitier 6, et l'autre, à l'opposé, sur le fond du boitier 6. Lorsqu'on souhaite mettre en oeuvre les dispositifs de connexion/déconnexion magnétique 10 dans des accumulateurs existants, on peut intégrer ceux-ci dans des adaptateurs d'interface 40 comme illustré aux figures 22 à 24.

Un tel adaptateur d'interface 40 comprend tout d'abord un corps 41 de forme de préférence complémentaire au moins en partie avec le fond 8 ou le couvercle 9 du boitier de l'accumulateur métal-ion. Ce corps 41 vient donc se monter par emboitement sur le fond 8 et/ou le couvercle 9.

Dans le mode illustré aux figures 22 à 24, le corps 41 comprend deux logements traversant 42 à l'intérieur de chacun desquels une borne de sortie 4, 5 de l'accumulateur métal-ion peut venir se loger. Le corps est isolant ou bien isolé électriquement d'une des 2 bornes.

Deux verrous magnétiques 11 comprenant chacun un aimant permanent 12 entouré d'un mandrin isolant 20 avec sa bobine enroulée 21, sont intégrés dans le corps 41. Le corps 41 peut être surmoulé autour des verrous magnétiques 11.

Les verrous magnétiques 11 sont ici agencés aux extrémités latérales de l'adaptateur d'interface 40, à l'extérieur et côte-à-côte avec les bornes de sortie 4, 5.

Les connexions électriques entre les bornes de sortie 4, 5 et les busbars B1 et/ou, B2 en vis-à-vis sont assurées par des pièces électriquement conductrices 43 adaptées chacune pour être fixée avec contact électrique à une borne de sortie de l'accumulateur. En outre, pour garantir un contact électrique optimal, deux rondelles éventail 18, électriquement conductrices sont agencées de part et d'autre d'une pièce 43.

Un BMS 30 peut être inséré à l'intérieur du corps 41 de l'adaptateur d'interface 40. Ce BMS 30 est connecté aux deux verrous magnétiques 11 et aux bornes de sortie 4, 5 par des languettes conductrices 31, 32.

L'agencement en côte-à-côte des verrous magnétiques 11 et des bornes de sortie 4, 5 avec un adaptateur d'interface 40 permet d'obtenir une pression de contact plus élevée lors d'un shunt par effet de levier, et entre l'accumulateur et les busbars B1 et/ou B2 du fait des surfaces magnétiques disponibles entre verrous magnétiques 11 et pièces ferromagnétiques 15 qui peuvent être plus importantes.

Les adaptateurs d'interface 40 selon les figures 22 à 24, peuvent s'adapter à tous les types d'accumulateur existants, quelle que soit l'architecture mécanique des bornes.

Par ailleurs, un adaptateur d'interface 40 ajoute une surépaisseur, ce qui peut permettre de mieux gérer les forces mises en jeux à l'interface entre accumulateur et busbars.

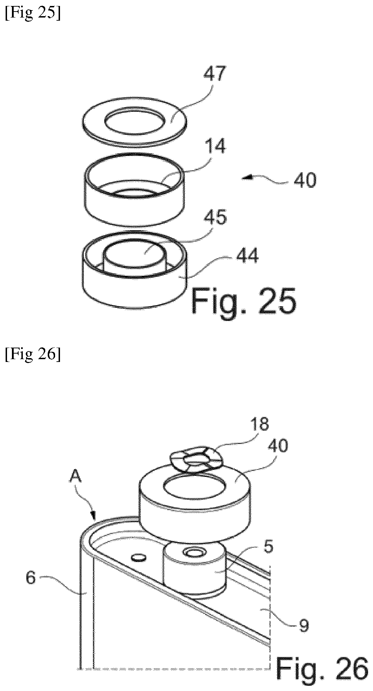

Un autre type d'adaptateur d'interface 40 est montré aux figures 25 à 27.

Cet adaptateur d'interface 40 comprend une enveloppe 44 en matériau isolant électrique, par exemple réalisée en matière plastique isolante. L'enveloppe peut également être en matériau conducteur en prenant soin de gérer les différentes isolations requises entre pièces à différents potentiels comme entre bornes et boitier par exemple. La forme de l'enveloppe est adaptée à la forme de la borne qui peut être cylindrique, parallélépipédique ou autre.

L'enveloppe 44 comprend une ouverture centrale débouchante 45, qui est adaptée pour venir se fixer, s'emmancher ou se visser ou se souder autour d'une borne de sortie d'un accumulateur A et une cavité 46 adaptée pour loger un verrou magnétique 11 conforme à l'invention, avec au moins une pièce ferromagnétique 14 de forme complémentaire qui vient s'emboiter à l'intérieur de la cavité 46.

Un capot d'obturation 47 ferme l'enveloppe 44 logeant le verrou magnétique 11.

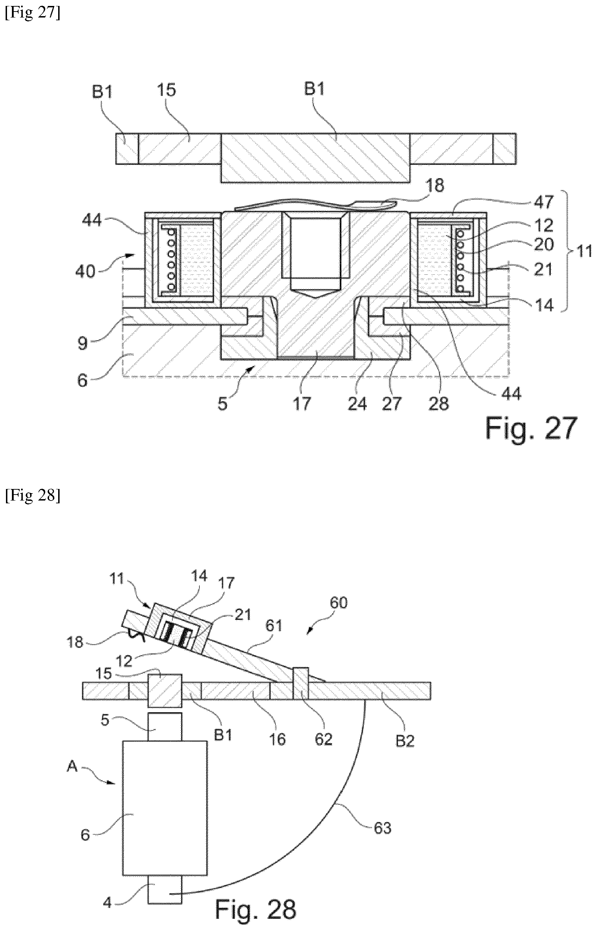

Dans le mode illustré en figure 27, l'adaptateur d'interface 40 intègre un verrou magnétique 11 comprenant un aimant permanent 12 entouré d'un mandrin isolant 20 avec sa bobine enroulée 21.

L'adaptateur d'interface 40 est ici agencé autour d'une borne de sortie existante formée par une traversée 5, avantageusement réalisée selon l'enseignement de la demande de brevet FR2989836.

Ainsi, la traversée 5 est réalisée à travers un orifice débouchant de part et d'autre du couvercle 9 de boitier 6 d'un accumulateur A.

La traversée 5 comprend une pièce femelle électriquement conductrice 24, et une pièce mâle électriquement conductrice 17 dont une portion est ajustée serrée dans un trou de la pièce femelle 24.

Deux rondelles électriquement isolantes 27, 28 comportent chacune une portion d'appui en appui surfacique avec pression contre l'une des faces du couvercle 9 et une portion de guidage en saillie par rapport à la portion d'appui et en contact avec le bord de l'orifice. En outre, chacune des pièces conductrices 17, 24 comporte une portion d'appui en appui surfacique avec pression contre une portion d'appui des rondelles 27.

Dans cette configuration de la figure 27, le verrou magnétique 11 est agencé de manière concentrique autour de la borne de sortie 5.

L'assemblage entre adaptateur d'interface 40 et borne de sortie selon la configuration concentrique de la figure 27 peut se faire par emmanchement à force ou soudage ou vissage autour de la borne de sortie 5 pourvu dans ce dernier cas d'un filetage externe non représenté. Ici aussi, les adaptateurs d'interface 40 selon les figures 25 à 27, peuvent s'adapter à tous les types d'accumulateur existants, quelle que soit l'architecture mécanique des bornes. En particulier, ces adaptateurs annulaires 40 peuvent être mise en oeuvre avec des accumulateurs au plomb dont l'emballage est en matière plastique isolante électriquement. L'illustration est faite sur un accumulateur à boitier rigide. Ce type d'adaptateur s'applique aussi aux accumulateurs à emballage souple.

On a représenté en figure 28 un exemple de dispositif de shunt magnétique 60 selon l'invention, destiné à assurer un shunt au sein d'un pack-batterie et à assurer ainsi une continuité de fonctionnement de ce dernier.

Le dispositif de shunt 60 comprend une lame électriquement conductrice 61, flexible, fixée à l'une de ses extrémités à un point de fixation 62 sur une partie conductrice de l'un des busbars. La lame 61 peut être en cuivre-béryllium.

A l'autre des extrémités de la lame flexible 61 est insérée un verrou magnétique 11 qui comprend une cavité conductrice 17 à l'intérieur de laquelle est logé une pièce ferromagnétique 14 logeant elle-même un aimant permanent 12 et une bobine 21 autour de l'aimant 12.

En position ouverte, comme représenté, l'élasticité de la lamelle conductrice doit être suffisante pour compenser l'attraction de l'aimant sur la plaque ferromagnétique sur la partie fixe, de sorte que le dispositif reste ouvert.

Lorsque l'on souhaite fermer le contact entre pièces conductrices 17, B1, on applique un courant dans la bobine 21 dans le sens adéquat, de sorte que le champ magnétique généré par la bobine renforce celui de l'aimant permanent 12. L'effort généré par le champ magnétique de la bobine et de l'aimant conjugué doit alors être supérieur à celui de la lame flexible 61. Le contact peut alors se fermer et son verrouillage magnétique effectué par le verrou magnétique 11 avec la pièce ferromagnétique fixe 15.

Lorsque l'on coupe le courant de commande de fermeture dans la bobine 21, l'aimant permanent 12 peut assurer seul le maintien car l'entrefer entre le verrou magnétique 11 et la pièce ferromagnétique 15 est réduit, ce qui implique un effort de verrouillage magnétique supérieur à celui de la lame flexible 61. Le dispositif de shunt 60 reste alors en position fermée, même en absence de courant dans la bobine de commande.

Pour ouvrir le dispositif de shunt 60, il faut injecter un courant opposé dans la bobine 21, de sorte que le champ magnétique généré par cette dernière soit opposé à celui de l'aimant permanent 12 et annule le champ résultant. Lorsque l'effort de maintien dû à ce champ résultant devient inférieur à celui de la lame flexible 61, le dispositif de shunt 60 peut s' ouvrir.

Le courant de commande d'ouverture dans la bobine peut alors être coupé car la lame 61 revient dans la position initiale, c'est-à-dire que la force magnétique d'attraction de l'aimant 12 est inférieure à la force d'ouverture de la lame 61.

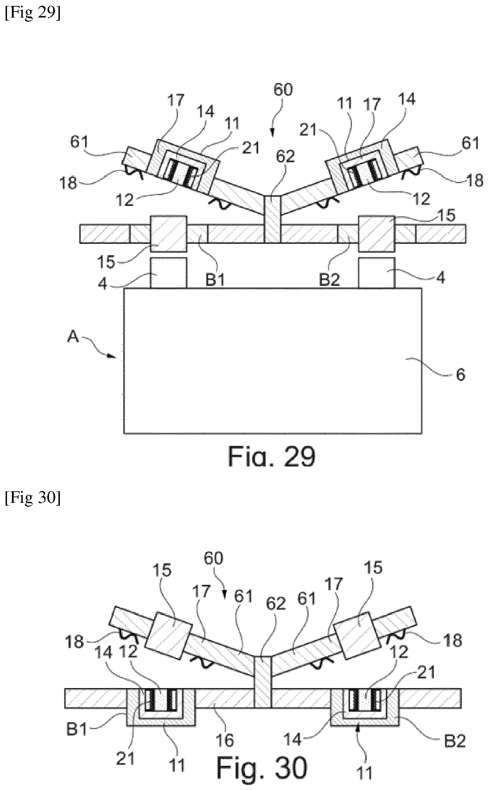

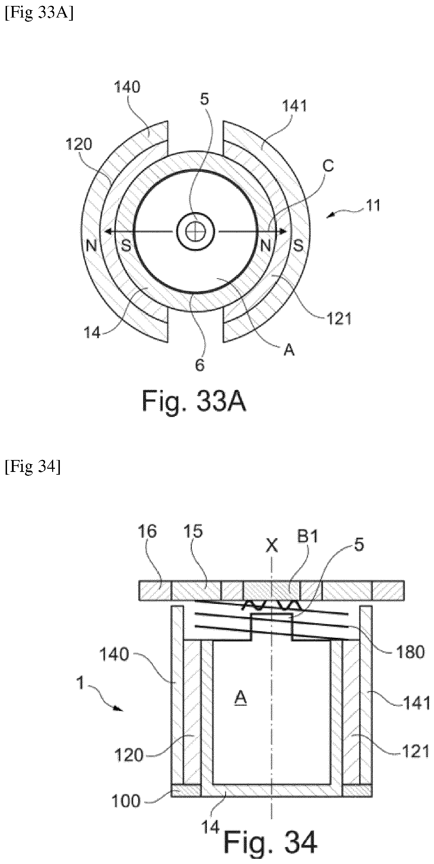

La figure 29 illustre une variante qui vient d'être décrite selon laquelle le dispositif à shunt 60 est dupliqué à l'exception de la fixation des lames: deux lames flexibles 61 sont fixées chacune à l'une de leurs extrémités à un point de fixation électriquement isolant et intègrent à l'autre de leurs extrémités un verrou magnétique 11. Le fonctionnement du dispositif de shunt 60 dupliqué est identique à celui décrit en référence à la figure 34.

En plus, le dispositif de shunt 60 dupliqué permet avantageusement de réaliser la déconnexion simultanée des deux bornes 4, 5 d'un accumulateur, alors que dans l'exemple de la figure 28, une seule borne 5 est concernée par le système de verrou, l'autre borne 4 étant reliée par exemple par un câble souple 63 au busbar B2.

Une autre variante du dispositif de shunt 60 est illustrée en figure 30: les verrous magnétiques 11 sont ici insérés dans la partie inférieure fixe, les pièces conductrices formant les cavités de logement des aimants permanents 12, bobines 21 et pièces ferromagnétiques 17 étant alors réalisées dans les busbars B1, B2 ou dans des pièces conductrices reliées à ces dernières. Cette variante de la figure 30 peut permettre de simplifier le raccordement des bobines de commande à l'unité électronique de pilotage notamment le BMS d'un accumulateur.

Les dispositifs de connexion/déconnexion magnétique qui viennent d'être décrits sont particulièrement bien adaptés lorsque l'accumulateur électrochimique A concerné est de dimensions conséquentes et/ou est configuré avec les deux bornes de sortie agencées sur un même côté de l'accumulateur.

En revanche, l'adaptation à des accumulateurs, notamment cylindriques avec une borne de sortie agencée d'un côté de l'accumulateur et l'autre borne de l'autre côté, est plus difficile à réaliser. Cela est d'autant plus vrai pour les accumulateurs de petites dimensions. En particulier, cela nécessite une connexion additionnelle sous la forme d'un fil souple, à l'instar du fil 63 illustré en figure 28, pour assurer la connexion électrique de la borne de polarité opposée, c'est-à-dire celle qui n'est pas directement connectée magnétiquement avec un busbar.

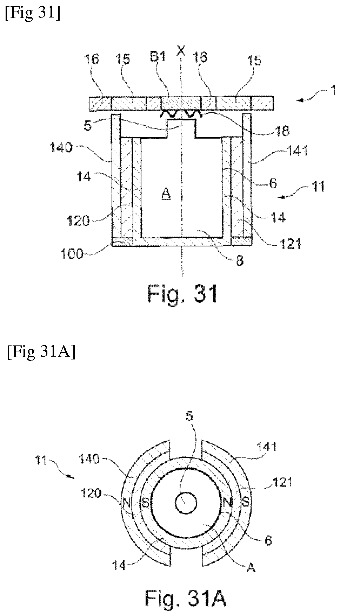

C'est pourquoi, les inventeurs ont pensé à réaliser un dispositif avec un autre adaptateur d'interface 40 à verrou magnétique 11 qui sert d'étui à un ou plusieurs accumulateurs dans leur intégralité, comme illustré aux figures 31 à 33A.

Un tel adaptateur d'interface 40 comprend tout d'abord une première pièce ferromagnétique 14 d'axe central (X) qui est borgne. Sa cavité forme un logement ou autrement dit un étui à au moins une partie d'un accumulateur A métal-ion. Le fond du logement est en contact électrique avec le fond 8 du boitier 6 d'accumulateur qui constitue une des bornes de sortie de l'accumulateur A. Dans le cadre de l'invention, une partie de la paroi latérale intérieure du logement peut également en lieu et place ou en sus du fond être en contact électrique avec une partie du boitier 6 d'accumulateur.

Deux autres pièces ferromagnétiques 140, 141 sous la forme de segments arqués, de préférence identiques, d'un cylindre concentrique à celui du boitier d'accumulateur sont agencées en étant réparties symétriquement autour de l'axe central (X) de la première pièce ferromagnétique 14. Les pièces ferromagnétiques 14, 140, 141 sont de préférence en fer doux qui est par ailleurs un bon conducteur électrique et donc assure donc la conduction du courant.

Une pièce 100 de liaison mécanique et électrique, en matériau amagnétique, solidarise la première pièce ferromagnétique 14 à chacune des autres pièces ferromagnétiques 140, 141 en formant entre elles un volume annulaire.

Deux aimants permanents 120, 121 sous la forme de segments arqués, de préférence identiques, d'un cylindre concentrique à celui du boitier d'accumulateur, sont répartis symétriquement autour de l'axe central (X) dans le volume annulaire précité, avec leurs pôles magnétiques opposés en regard l'un de l'autre. Les deux aimants permanents 120, 121 sont reliés entre eux par la première pièce ferromagnétique 14 et reliés chacun d'entre eux respectivement à l'une ou l'autre des autres pièces ferromagnétiques 140, 141 en constituant un verrou magnétique 11. Chacun des aimants permanents 120, 121 est de préférence un plasto- aimants constitué d'un mélange de poudre de ferrite et de plastique, qui est isolant électriquement.

Une rondelle électriquement conductrice 18, ondulée ou éventail assure un contact électrique entre l'autre des bornes de sortie 5 de l'accumulateur et le busbar B1, dans leur configuration connectée.

La pièce de liaison 100 est réalisée dans un matériau conducteur amagnétique, de préférence du cuivre ou de l'aluminium amagnétique pour ne pas shunter les deux aimants 120, 121. La pièce de liaison 100 assure la tenue mécanique des différentes pièces du verrou magnétique 11. Elle assure également la liaison électrique entre la pièce magnétique 14 en contact avec le fond 8 et/ou l'enveloppe latérale de l'accumulateur A, qui constitue une borne de sortie et les pièces 140, 141 qui forment une partie du circuit magnétique externe qui est en contact avec le busbar B1.

Le circuit magnétique fermé sur lui-même entre le verrou magnétique 11 et une autre pièce ferromagnétique 15, solidaire du busbar B1, qui forme une plaque de fermeture assure, lors d'un fonctionnement normal de l'accumulateur, une connexion mécanique et électrique entre l'accumulateur A et le busbar B1. La pièce de fermeture 15 peut être sous la forme d'une rondelle en matériau ferromagnétique, de préférence en fer doux.

La pièce ferromagnétique 15 est insérée dans un substrat isolant 16 intégrant le busbar B 1. Cette pièce 15 est à un potentiel différent de B1, et elle est typiquement liée à un autre busbar (ou autre connectique).

Comme illustré, une rondelle éventail 18 peut être agencée entre la borne de sortie 5 et le busbar B 1. Cette rondelle 18 sert à gérer la chaîne de côtes, c'est-à-dire pour compenser une différence de dimension, de sorte à avoir un bon contact mécanique et électrique sur le busbar B1 et la pièce ferromagnétique 15. Le contact sur la pièce ferromagnétique 15 servant également au circuit magnétique doit être réalisé avec un entrefer très faible.

La rondelle éventail 18 peut également être agencée entre le fond de l'accumulateur et le fond du logement de la pièce ferromagnétique 14.

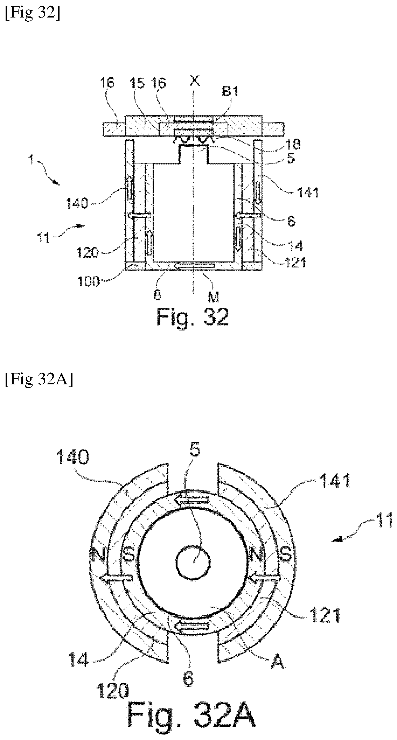

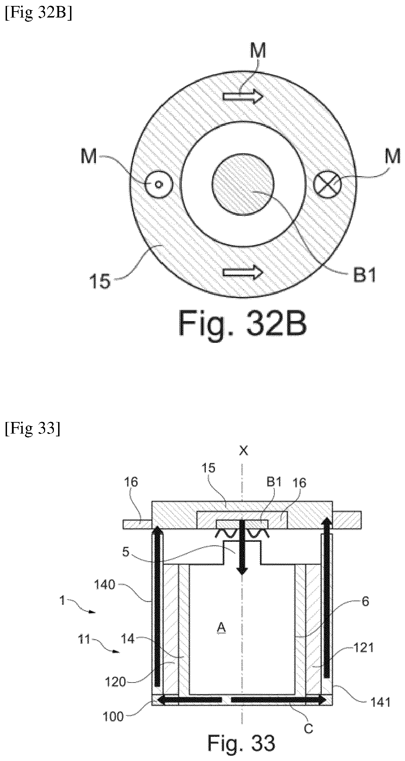

Le flux du circuit magnétique fermé est symbolisé par des flèches aux figures 32, 32A et 32B.

Le flux du courant de puissance C qui circule depuis le busbar B1 à travers l'accumulateur A est également symbolisé par des flèches aux figures 33 et 33A : le courant passe depuis la borne de sortie 5 dans l'accumulateur A puis sort par son fond en tant qu'autre borne de sortie puis ressort respectivement par la pièce ferromagnétique 14, la pièce de liaison 100 et les pièces ferromagnétiques périphériques 140, 141 pour être injecté dans la pièce ferromagnétique 15.

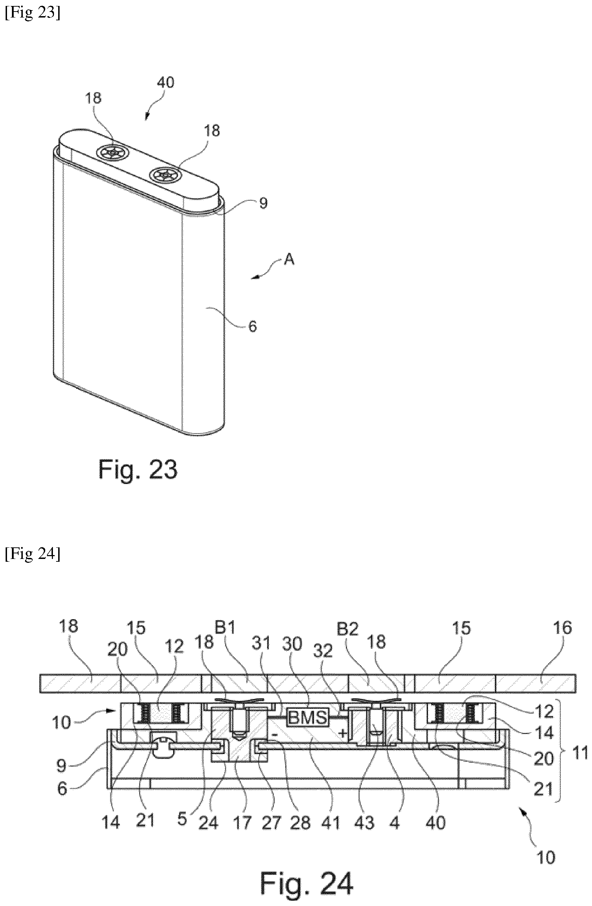

La fonction de conduction électrique entre les deux bornes 5, 8 de l'accumulateur A et le busbar B1 est donc réalisée sans qu'il soit nécessaire de mettre en oeuvre un fil de liaison électrique comme celui illustré sous la référence 63 en figure 24.

Ainsi, le montage selon les figures 31 à 34 est plus simple par rapport à une configuration avec un fil de liaison.

Le dispositif 1 permet d'assurer de manière complètement passive la déconnexion électrique de l'accumulateur A logé intégralement dans le verrou magnétique, en cas d'échauffement anormal. Ainsi, lorsque la température de l'un ou l'autre des aimants permanents 120, 121 atteint la température de curie, ce dernier perd ses propriétés magnétiques et l'accumulateur se déconnecte du busbar B1 en tombant par gravité. Cette chute par gravité ne risque pas d'être gênée par un fil électrique de liaison 63 comme dans le dispositif illustré en figure 24. Pour s'affranchir de la gravité, on peut prévoir une variante avec un ressort de compression 180, agencé dans l'espace libre entre la borne de sortie 5 et le circuit magnétique du verrou 11, comme illustré en figure 34. Le ressort 180 peut-être métallique en veillant à ce qu'il ne touche aucune partie électriquement conductrice, par exemple en dimensionnant un diamètre adéquat. Il peut aussi être en matière plastique isolante électrique.

Les inventeurs ont réalisé des simulations avec des dimensions mêmes très faibles, du verrou magnétique qui montrent que l'effort de connexion magnétique est très conséquent pour des accumulateurs Li-ion existants au point qu'il n'y aucun risque de décrochage non souhaité de ces derniers.

Par exemple, typiquement pour :
- une épaisseur totale de l'ordre de 2mm pour le verrou 11, répartie entre une épaisseur de 0,5mm pour chaque pièce ferromagnétique 14, 140 , 141 sous la forme d'une tôle en fer doux et 1mm pour un aimant permanent 120, 121 plasto-aimant, l'effort magnétique généré est de l'ordre de 66N ;
- pour une épaisseur totale de l'ordre de 1,1 mm pour le verrou 11, répartie entre une épaisseur de 0,3mm pour chaque tôle en fer doux , 14, 140, 141 et 0,5 mm pour un plasto-aimant 120, 121, l'effort magnétique généré est de l'ordre de 16N.

Ces efforts sont largement suffisants pour supporter un accumulateur par exemple existant sous un des formats standards 18650.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention. L'invention est strictement définie par l'objet des revendications 1 et 12.

Si dans les modes de réalisation illustrés aux figures 31 à 33A, le verrou magnétique de l'adaptateur d'interface loge un seul accumulateur cylindrique à boitier rigide, on peut envisager d'en loger plusieurs. Également, un ou plusieurs accumulateurs à boitier prismatique ou à emballage souple peuvent être logés dans le verrou magnétique.

Une alternative à ce mode illustré aux figures 31 à 33A consiste à ne pas implanter de première pièce ferromagnétique dont la fonction est directement assurée par le boitier d'accumulateur.

Selon cette alternative, le boitier d'accumulateur est donc en un matériau ferromagnétique. Un fabricant d'accumulateurs peut intégrer directement dans son processus de fabrication des étapes additionnelles d'assemblage, en quelque sorte d'habillage d'accumulateurs autour de leurs boitiers avec des pièces ferromagnétiques et des aimants permanents, afin de fournir des accumulateurs à verrouillage magnétique prêts à l'emploi, qui en combinaison chacun avec un busbar adapté constitue un dispositif de connexion/déconnexion magnétique

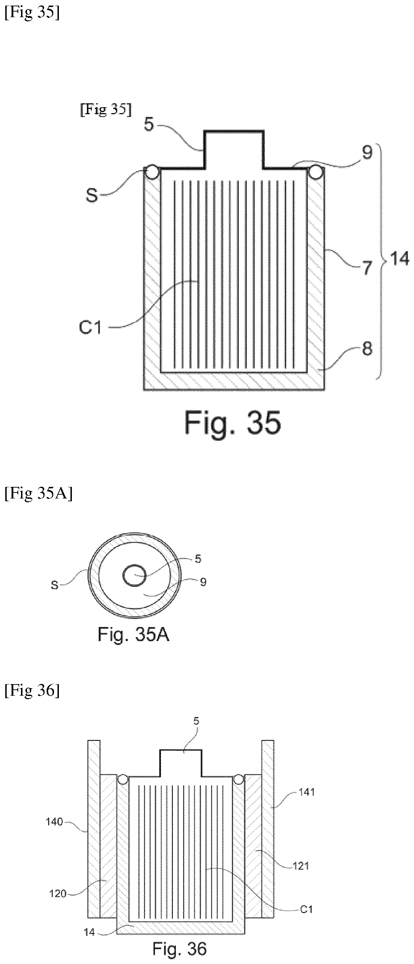

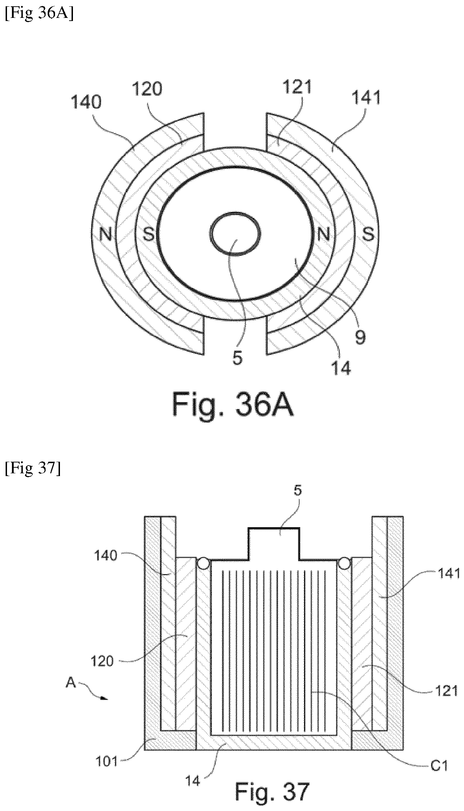

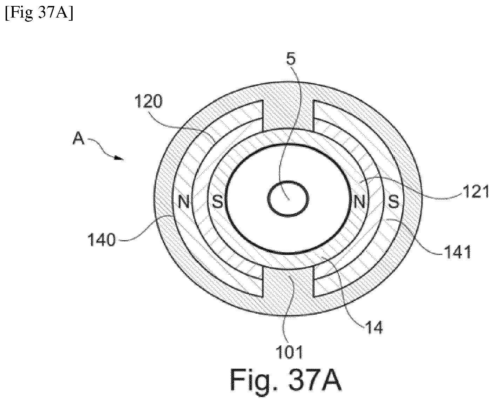

Un exemple de procédé de fabrication de tels accumulateurs à verrouillage magnétique va maintenant être expliqué en référence aux figures 35 à 37A.
- Etape i/ : fabrication de l'accumulateur en lui-même (figures 35 et 35 A). Le boitier 14 de l'accumulateur est en matériau magnétique, par exemple en inox de nuance magnétique. Le boitier 14 comporte une enveloppe latérale cylindrique 7, un fond 8 à une extrémité, un couvercle 9 à l'autre extrémité, le fond 8 formant avec l'enveloppe 7 un godet dans lequel la cellule électrochimique C1 est logée. Le couvercle 9 qui supporte un pôle ou borne de sortie du courant 5 est assemblé au godet 7, 8 par un cordon de soudure continu réalisé par laser ou par moyen électrique. Le boitier rigide 14 ainsi constitué forme la première pièce ferromagnétique.
- Etape ii/ : mise en place avec fixation éventuelle autour du boitier 14 de l'accumulateur des deux aimants permanents 120, 121 et deuxième et troisième pièces ferromagnétiques 140, 142, typiquement en fer doux ou en acier inoxydable magnétique, pour compléter le verrou magnétique (figures 36 et 36A).
- Etape iii/ : fixation par exemple par sertissage d'un élément conducteur électrique 101, en matériau amagnétique, typiquement en aluminium, au boitier 14 de l'accumulateur et aux deuxième et troisième pièces ferromagnétiques 140, 141, de sorte à assurer la conduction électrique entre l'emballage de l'accumulateur et le busbar B1 (figures 37 et 37A). L'élément 101 est destiné à être en contact électrique avec la pièce ferromagnétique 15, tandis que la borne de sortie 5 est destinée à être en contact électrique avec le busbar B1.

Afin de permettre le maintien des aimants permanents 120, 121 et des deuxième et troisième pièces ferromagnétiques 140, 141 dans cette configuration, l'élément serti 101 peut être conçu pour épouser les côtés latéraux du dispositif ainsi réalisé sur au moins une partie de la hauteur voire sur toute la hauteur comme illustré en figure 37, afin d'assurer une bonne tenue mécanique sur toute la hauteur de l'accumulateur A.

Pour la tenue mécanique, d'autres variantes sont possibles et connues de l'homme de l'art comme par exemple l'utilisation de collage, ou de rivetage.

Par ailleurs, si dans les modes de réalisation illustrés aux figures 31 à 33A, les deux aimants permanents mis en oeuvre sont des plasto-aimants sous la forme de segments arqués d'un cylindre concentrique au boitier cylindrique d'accumulateur, on peut aussi envisager deux aimants frittés, moins étendus en surface, mais avec des performances magnétiques plus élevées.

La rondelle éventail ondulée peut également être agencée entre le fond de l'accumulateur A et celui de la pièce ferromagnétique 14.

En outre, si dans l'ensemble des exemples illustrés, les bornes de sortie des accumulateurs conformes à l'invention ont une forme générale cylindrique, l'invention s'applique bien entendu à toutes les formes géométriques de bornes (section carrée ou rectangulaire, hexagonale...).

De même, la forme des aimants permanents ainsi que leur agencement peuvent être adaptés en fonction de la forme des accumulateurs, et des logements prévus pour ceux-ci. Quelle que soit la forme des aimants permanents et leur agencement, il est nécessaire de conserver une association en série magnétique entre les deux aimants permanents.

### Liste des références citées :

[1] Xuning Fenga, et al. « Key Characteristics for Thermal Runaway of Li-ion Batteries » Energy Procedia, 158 (2019) 4684-4689.
[2] M. Soka et al. « Role of thermomagnetic curves at preparation of Ni Zn ferrites with Fe ions deficiency», Journal of Electrical Engineering, Vol.61 N°7/s, 2010, pp163-165.
[3] K Murakami « The characteristics of Ferrite cores with low Curie température and their application », IEEE Transactions on magnetics, Volume: 1, Issue: 2, June 1965.

## Revendications

1. Adaptateur d'interface (40) comprenant :
- une première pièce ferromagnétique (14) d'axe longitudinal (X), la première pièce ferromagnétique étant borgne en formant un logement d'au moins un accumulateur,
- au moins une deuxième et une troisième pièce ferromagnétique (140, 141) agencées étant réparties autour de l'axe longitudinal (X) de la première pièce ferromagnétique,
- une pièce (100) de liaison mécanique et électrique, en matériau amagnétique, solidarisant la première pièce ferromagnétique aux deuxième et troisième pièces ferromagnétiques, en formant entre elles un volume dans lequel sont logés deux aimants permanents (120, 121) répartis autour de l'axe longitudinal (X) avec leurs pôles magnétiques opposés en série magnétique et reliés entre eux par la première pièce ferromagnétique et reliés chacun d'entre eux respectivement à la deuxième et à la troisième pièce ferromagnétique en constituant un verrou magnétique (11).

2. Adaptateur d'interface selon la revendication 2, la température de Curie d'au moins un des deux aimants permanents étant choisie pour être comprise entre une valeur proche de 90% de la température d'auto-échauffement (T1) et une valeur proche de 110% de la température d'emballement thermique (T2) de l'au moins un accumulateur destiné à être logé dans le logement de la pièce ferromagnétique.

3. Adaptateur d'interface selon la revendication 1 ou 2, chacun des deux aimants permanents étant un aimant fritté ou un plasto-aimant (120, 121), l'aimant fritté étant de préférence à base de terres rares, de préférence en samarium-cobalt ou néodyme-fer-bore, ou de préférence en ferrite ou de préférence en alliage aluminium-nickel cobalt, le plasto-aimant étant de préférence à base de terres rares, de préférence en samarium-cobalt ou néodyme-fer-bore, ou en ferrite.

4. Adaptateur d'interface selon l'une des revendications 1 à 2, comprenant au moins une pièce électriquement conductrice (18) agencée pour assurer un contact électrique d'une part entre l'autre des bornes de sortie de l'accumulateur et le busbar et d'autre part entre les deuxième et troisième pièce ferromagnétique et la quatrième pièce ferromagnétique (15).

5. Adaptateur d'interface selon la revendication 4, comprenant en tant que pièce électriquement conductrice, au moins une rondelle (18) ondulée ou éventail électriquement conductrice, la rondelle étant de préférence en alliage de cuivre-phosphore.

6. Adaptateur d'interface selon l'une des revendications 1 à 5, les première, deuxième et troisième pièces ferromagnétiques étant en fer doux.

7. Adaptateur d'interface selon l'une des revendications 1 à 6, la pièce de liaison mécanique et électrique étant en cuivre ou en aluminium, de préférence soudée à la fois à la première et aux deuxième et troisième pièces ferromagnétiques.

8. Module d'un pack-batterie comprenant :
- un accumulateur de géométrie cylindrique à emballage à boitier rigide ;
- un adapteur d'interface selon l'une des revendications 1 à 7, la première pièce ferromagnétique étant un cylindre borgne dans laquelle l'accumulateur est logé avec contact entre la paroi latérale et/ou le fond de son boîtier rigide et celle, respectivement celui, du cylindre borgne, les deuxième et troisième pièces ferromagnétiques étant conformées en segments arqués d'un même cylindre concentrique à l'accumulateur, les aimants permanents étant conformés en segments arqués d'un même cylindre concentrique à l'accumulateur.

9. Module d'un pack-batterie comprenant :
- une pluralité d'accumulateurs de géométrie cylindrique à emballage à boîtier rigide ;
- un adapteur d'interface selon l'une des revendications 1 à 7, la première pièce ferromagnétique étant un cylindre borgne dans laquelle la pluralité d'accumulateurs est logée avec contact entre eux par leur enveloppe latérale et avec contact entre la paroi latérale et/ou le fond de tous les boîtiers rigides et celle, respectivement celui, du cylindre borgne, les deuxième et troisième pièces ferromagnétiques étant conformées en segments arqués d'un même cylindre concentrique autour d'un axe de répartition de la pluralité d'accumulateurs, les aimants permanents étant conformés en segments arqués d'un même cylindre concentrique autour d'un axe de répartition de la pluralité d'accumulateurs.

10. Module d'un pack-batterie comprenant :
- un accumulateur de géométrie à empilement à emballage souple ou rigide de forme prismatique dont l'une des bornes de sortie est agencée sur l'une des faces principales de l'emballage;
- un adapteur d'interface selon l'une des revendications 1 à 7, la première pièce ferromagnétique étant un parallélépipède borgne dans laquelle l'accumulateur est logé avec contact entre la borne de sortie sur la face principale de l'emballage et la paroi latérale et/ou le fond du parallélépipède borgne, les deuxième et troisième pièces ferromagnétiques étant conformées en plaques planes parallèles chacune à une des faces latérales du parallélépipède borgne, les aimants permanents étant conformés plaques planes parallèles chacune à une des faces latérales du parallélépipède borgne.

11. Module d'un pack-batterie comprenant :
- une pluralité d'accumulateurs de géométrie à empilement à emballage souple ou rigide de forme prismatique dont l'une des bornes de sortie est agencée sur l'une des faces principales de l'emballage;
- un adapteur d'interface selon l'une des revendications 1 à 7, la première pièce ferromagnétique étant un parallélépipède borgne dans laquelle les accumulateurs sont logés avec contact entre la borne de sortie sur la face principale d'au moins un des emballages et la paroi latérale et/ou le fond du parallélépipède borgne, les deuxième et troisième pièces ferromagnétiques étant conformées en plaques planes parallèles chacune à une des faces latérale du parallélépipède borgne, les aimants permanents étant conformés plaques planes parallèles chacune à une des faces latérales du parallélépipède borgne.

12. Accumulateur (A) comprenant :
- un boîtier d'axe longitudinal (X) constituant une première pièce ferromagnétique (14) ;
- au moins une deuxième et une troisième pièce ferromagnétique (140, 141) agencées en étant réparties autour de l'axe longitudinal (X) de la première pièce ferromagnétique,
- au moins un élément de liaison mécanique et électrique (101), en matériau amagnétique, solidarisant la première pièce ferromagnétique aux deuxième et troisième pièces ferromagnétiques, en formant entre elles un volume dans lequel sont logés deux aimants permanents (120, 121) répartis autour de l'axe longitudinal (X) avec leurs pôles magnétiques opposés en série magnétique et reliés entre eux par la première pièce ferromagnétique et reliés chacun d'entre eux respectivement à la deuxième et à la troisième pièce ferromagnétique en constituant un verrou magnétique (11).

13. Accumulateur (A) selon la revendication 12, l'élément de liaison mécanique et électrique (101) étant conformé autour des deuxième et troisième pièces ferromagnétiques, de préférence en remplissant le(s) volume(s) libre(s) entre elle(s) et entre aimants permanents.

14. Accumulateur (A) selon la revendication 12 ou 13, l'élément élément de liaison mécanique et électrique (101) étant serti sur le boîtier de l'accumulateur en maintenant les deuxième et troisième pièces ferromagnétiques et les deux aimants permanents.

15. Module d'un pack-batterie comprenant une pluralité d'accumulateurs de géométrie cylindrique à emballage à boîtier rigide selon l'une des revendications 12 à 14.

16. Dispositif (1) de connexion/déconnexion entre au moins un accumulateur (A) et une barre de connexion électrique, dite busbar (B1), comprenant :
- au moins un accumulateur (A),
- un adaptateur d'interface selon l'une des revendications 1 à 7, au moins une partie de sa paroi latérale et/ou du fond de son logement étant en contact électrique avec une des bornes de sortie de l'accumulateur,
- au moins une quatrième pièce ferromagnétique (15), solidaire du busbar (B1), formant une plaque de fermeture d'un circuit magnétique avec le verrou magnétique, le circuit magnétique fermé assurant, lors d'un fonctionnement normal de l'au moins un accumulateur, une connexion mécanique et électrique entre l'au moins un accumulateur et le busbar.

17. Dispositif (1) de connexion/déconnexion entre au moins un accumulateur (A) et une barre de connexion électrique, dite busbar (B1), comprenant :
- au moins un accumulateur selon l'une des revendications 12 à 14,
- au moins une quatrième pièce ferromagnétique (15), solidaire du busbar (B1), formant une plaque de fermeture d'un circuit magnétique avec le verrou magnétique, le circuit magnétique fermé assurant, lors d'un fonctionnement normal de l'au moins un accumulateur, une connexion mécanique et électrique entre l'au moins un accumulateur et le busbar.

18. Dispositif (1) de connexion/déconnexion selon la revendication 16 ou 17, les deuxième et une troisième pièce ferromagnétique ainsi que les deux aimants permanents étant agencés symétriquement autour de l'axe longitudinal (X) de la première pièce ferromagnétique.

19. Dispositif (1) de connexion/déconnexion selon l'une des revendications 16 à 18, le dispositif étant configuré de sorte que, lors d'une défaillance de l'au moins un accumulateur provoquant une surchauffe de ce dernier, au moins un des deux aimants permanents chauffe jusqu'à une température de Curie à partir de laquelle il perd ses propriétés magnétiques, jusqu'à provoquer la déconnexion mécanique entre l'au moins un accumulateur et le busbar, ce qui provoque une chute ou un déplacement par gravité ou un déplacement par action d'au moins un moyen mécanique de l'au moins un accumulateur.

20. Dispositif (1) de connexion/déconnexion selon la revendication 19, la température de Curie d'au moins un des deux aimants permanents étant choisie pour être comprise entre une valeur proche de 90% de la température d'auto-échauffement (T1) et une valeur proche de 110% de la température d'emballement thermique (T2) de l'au moins un accumulateur.

21. Dispositif (1) de connexion/déconnexion selon l'une des revendications 16 à 20, chacun des deux aimants permanents étant un aimant fritté ou un plasto-aimant (120, 121), l'aimant fritté étant de préférence à base de terres rares, de préférence en samarium-cobalt ou néodyme-fer-bore, ou de préférence en ferrite ou de préférence en alliage aluminium-nickel cobalt, le plasto-aimant étant de préférence à base de terres rares, de préférence en samarium-cobalt ou néodyme-fer-bore, ou en ferrite.

22. Dispositif de connexion/déconnexion selon l'une des revendications 16 à 21, l'adaptateur d'interface comprenant au moins une pièce électriquement conductrice (18) agencée pour assurer un contact électrique d'une part entre l'autre des bornes de sortie de l'accumulateur et le busbar et d'autre part entre les deuxième et troisième pièce ferromagnétique et la quatrième pièce ferromagnétique (15).

23. Dispositif de connexion/déconnexion selon la revendication 22, comprenant en tant que pièce électriquement conductrice, au moins une rondelle (18) ondulée ou éventail électriquement conductrice.

## Patentansprüche

1. Schnittstellenadapter (40), der Folgendes beinhaltet:
- ein erstes ferromagnetisches Teil (14) mit einer Längsachse (X), wobei das erste ferromagnetische Teil nicht durchgängig ist und so eine Aufnahme für mindestens einen Akkumulator bildet,
- mindestens ein zweites und ein drittes ferromagnetisches Teil (140, 141), die um die Längsachse (X) des ersten ferromagnetischen Teils herum verteilt eingerichtet sind,
- ein Teil (100) zur mechanischen und elektrischen Verbindung aus einem nicht magnetischen Material, das das erste ferromagnetische Teil mit dem zweiten und dritten ferromagnetischen Teil fest verbindet und dabei zwischen ihnen ein Volumen bildet, in dem zwei Permanentmagneten (120, 121) aufgenommen sind, die mit ihren entgegengesetzten magnetischen Polen magnetisch in Reihe um die Längsachse (X) herum verteilt sind und untereinander durch das erste ferromagnetische Teil verbunden sind und jeweils für sich mit dem zweiten bzw. dritten ferromagnetischen Teil verbunden sind, um so eine magnetische Verrieglung (11) zu bilden.

2. Schnittstellenadapter nach Anspruch 2, wobei die Curie-Temperatur von mindestens einem der zwei Permanentmagneten so gewählt ist, dass sie zwischen einem Wert nahe 90 % der Selbsterhitzungstemperatur (T1) und einem Wert nahe 110 % der Temperatur beim thermischen Durchgehen (T2) des mindestens einen Akkumulators liegt, der dazu bestimmt ist, in der Aufnahme des ferromagnetischen Teils aufgenommen zu sein.

3. Schnittstellenadapter nach Anspruch 1 oder 2, wobei jeder der zwei Permanentmagneten ein Sintermagnet oder ein Plastomagnet (120, 121) ist, wobei der Sintermagnet vorzugsweise auf seltenen Erden basiert, vorzugsweise aus Samarium-Cobalt oder Neodym-Eisen-Bor oder vorzugsweise aus Ferrit oder vorzugsweise aus einer Aluminium-Nickel-Cobalt-Legierung besteht, wobei der Plastomagnet vorzugsweise auf seltenen Erden basiert, vorzugsweise aus Samarium-Cobalt oder Neodym-Eisen-Bor oder aus Ferrit besteht.

4. Schnittstellenadapter nach einem der Ansprüche 1 bis 2, der mindestens ein elektrisch leitendes Teil (18) beinhaltet, das dazu eingerichtet ist, einen elektrischen Kontakt einerseits zwischen dem anderen der Ausgangsanschlüsse des Akkumulators und der Stromschiene und andererseits zwischen dem zweiten und dritten ferromagnetischen Teil und dem vierten ferromagnetischen Teil (15) zu gewährleisten.

5. Schnittstellenadapter nach Anspruch 4, der als elektrisch leitendes Teil mindestens eine elektrisch leitende gewellte oder Fächerscheibe (18) beinhaltet, wobei die Scheibe vorzugsweise aus einer Kupfer-Phosphor-Legierung besteht.

6. Schnittstellenadapter nach einem der Ansprüche 1 bis 5, wobei das erste, das zweite und das dritte ferromagnetische Teil aus Weicheisen bestehen.

7. Schnittstellenadapter nach einem der Ansprüche 1 bis 6, wobei das Teil zur mechanischen und elektrischen Verbindung aus Kupfer oder Aluminium besteht und vorzugsweise sowohl an das erste als auch an das zweite und das dritte ferromagnetische Teil geschweißt ist.

8. Modul eines Akkupacks, das Folgendes beinhaltet:
- einen Akkumulator mit zylindrischer Geometrie mit einer Verpackung mit einem starren Gehäuse;
- einen Schnittstellenadapter nach einem der Ansprüche 1 bis 7, wobei das erste ferromagnetische Teil ein nicht durchgängiger Zylinder ist, in dem der Akkumulator mit Kontakt zwischen der Seitenwand und/oder dem Boden seines starren Gehäuses und derjenigen bzw. demjenigen des nicht durchgängigen Zylinders aufgenommen ist, wobei das zweite und das dritte ferromagnetische Teil als Bogensegmente eines gleichen, zu dem Akkumulator konzentrischen Zylinders ausgebildet sind, wobei die Permanentmagneten als Bogensegmente eines gleichen, zu dem Akkumulator konzentrischen Zylinders ausgebildet sind.

9. Modul eines Akkupacks, das Folgendes beinhaltet:
- eine Vielzahl von Akkumulatoren mit zylindrischer Geometrie mit einer Verpackung mit einem starren Gehäuse;
- einen Schnittstellenadapter nach einem der Ansprüche 1 bis 7, wobei das erste ferromagnetische Teil ein nicht durchgängiger Zylinder ist, in dem die Vielzahl von Akkumulatoren mit Kontakt untereinander durch ihre seitliche Umhüllung und mit Kontakt zwischen der Seitenwand und/oder dem Boden aller starren Gehäuse und derjenigen bzw. demjenigen des nicht durchgängigen Zylinders aufgenommen sind, wobei das zweite und das dritte ferromagnetische Teil als Bogensegmente eines gleichen, um eine Verteilungsachse der Vielzahl von Akkumulatoren konzentrischen Zylinders ausgebildet sind, wobei die Permanentmagneten als Bogensegmente eines gleichen, um eine Verteilungsachse der Vielzahl von Akkumulatoren konzentrischen Zylinders ausgebildet sind.

10. Modul eines Akkupacks, das Folgendes beinhaltet:
- einen Akkumulator mit einer Stapelgeometrie mit einer flexiblen oder starren Verpackung mit prismatischer Form, von dem einer der Ausgangsanschlüsse auf einer der Hauptflächen der Verpackung eingerichtet ist;
- einen Schnittstellenadapter nach einem der Ansprüche 1 bis 7, wobei das erste ferromagnetische Teil ein nicht durchgängiges Parallelepiped ist, in dem der Akkumulator mit Kontakt zwischen dem Ausgangsanschluss auf der Hauptfläche der Verpackung und der Seitenwand und/oder dem Boden des nicht durchgängigen Parallelepipeds aufgenommen ist, wobei das zweite und das dritte ferromagnetische Teil als ebene Platten ausgebildet sind, die jeweils zu einer der Seitenflächen des nicht durchgängigen Parallelepipeds parallel sind, wobei die Permanentmagneten als ebene Platten ausgebildet sind, die jeweils zu einer der Seitenflächen des nicht durchgängigen Parallelepipeds parallel sind.

11. Modul eines Akkupacks, das Folgendes beinhaltet:
- eine Vielzahl von Akkumulatoren mit einer Stapelgeometrie mit einer flexiblen oder starren Verpackung mit prismatischer Form, von denen einer der Ausgangsanschlüsse auf einer der Hauptflächen der Verpackung eingerichtet ist;
- einen Schnittstellenadapter nach einem der Ansprüche 1 bis 7, wobei das erste ferromagnetische Teil ein nicht durchgängiges Parallelepiped ist, in dem die Akkumulatoren mit Kontakt zwischen dem Ausgangsanschluss auf der Hauptfläche mindestens einer der Verpackungen und der Seitenwand und/oder dem Boden des nicht durchgängigen Parallelepipeds aufgenommen sind, wobei das zweite und das dritte ferromagnetische Teil als ebene Platten ausgebildet sind, die jeweils zu einer der Seitenflächen des nicht durchgängigen Parallelepipeds parallel sind, wobei die Permanentmagneten als ebene Platten ausgebildet sind, die jeweils zu einer der Seitenflächen des nicht durchgängigen Parallelepipeds parallel sind.

12. Akkumulator (A), der Folgendes beinhaltet:
- ein Gehäuse mit einer Längsachse (X), das ein erstes ferromagnetisches Teil (14) bildet;
- mindestens ein zweites und ein drittes ferromagnetisches Teil (140, 141), die um die Längsachse (X) des ersten ferromagnetischen Teils herum verteilt eingerichtet sind,
- mindestens ein Element (101) zur mechanischen und elektrischen Verbindung aus einem nicht magnetischen Material, das das erste ferromagnetische Teil mit dem zweiten und dritten ferromagnetischen Teil fest verbindet und dabei zwischen ihnen ein Volumen bildet, in dem zwei Permanentmagneten (120, 121) aufgenommen sind, die mit ihren entgegengesetzten magnetischen Polen magnetisch in Reihe um die Längsachse (X) herum verteilt sind und untereinander durch das erste ferromagnetische Teil verbunden sind und jeweils für sich mit dem zweiten bzw. dritten ferromagnetischen Teil verbunden sind, um so eine magnetische Verrieglung (11) zu bilden.

13. Akkumulator (A) nach Anspruch 12, wobei das Element (101) zur mechanischen und elektrischen Verbindung um das zweite und das dritte ferromagnetische Teil herum ausgebildet ist und dabei vorzugsweise das oder die freien Volumen zwischen ihnen und zwischen Permanentmagneten ausfüllt.

14. Akkumulator (A) nach Anspruch 12 oder 13, wobei das Element (101) zur mechanischen und elektrischen Verbindung auf das Gehäuse des Akkumulators gecrimpt ist und dadurch das zweite und das dritte ferromagnetische Teil und die zwei Permanentmagneten hält.

15. Modul eines Akkupacks, das eine Vielzahl von Akkumulatoren mit zylindrischer Geometrie mit einer Verpackung mit einem starren Gehäuse nach einem der Ansprüche 12 bis 14 beinhaltet.

16. Verbindungs-/Trennvorrichtung (1) zwischen mindestens einem Akkumulator (A) und einer elektrischen Verbindungsschiene, als Stromschiene (B1) bezeichnet, die Folgendes beinhaltet:
- mindestens einen Akkumulator (A),
- einen Schnittstellenadapter nach einem der Ansprüche 1 bis 7, wobei mindestens ein Teil seiner Seitenwand und/oder des Bodens seiner Aufnahme in elektrischem Kontakt mit einem der Ausgangsanschlüsse des Akkumulators steht,
- mindestens ein viertes ferromagnetisches Teil (15), das mit der Stromschiene (B1) fest verbunden ist und eine Platte zum Schließen eines Magnetkreises mit der magnetischen Verriegelung bildet, wobei der geschlossene Magnetkreis im Normalbetrieb des mindestens einen Akkumulators eine mechanische und elektrische Verbindung zwischen dem mindestens einen Akkumulator und der Stromschiene gewährleistet.

17. Verbindungs-/Trennvorrichtung (1) zwischen mindestens einem Akkumulator (A) und einer elektrischen Verbindungsschiene, als Stromschiene (B1) bezeichnet, die Folgendes beinhaltet:
- mindestens einen Akkumulator nach einem der Ansprüche 12 bis 14,
- mindestens ein viertes ferromagnetisches Teil (15), das mit der Stromschiene (B1) fest verbunden ist und eine Platte zum Schließen eines Magnetkreises mit der magnetischen Verriegelung bildet, wobei der geschlossene Magnetkreis im Normalbetrieb des mindestens einen Akkumulators eine mechanische und elektrische Verbindung zwischen dem mindestens einen Akkumulator und der Stromschiene gewährleistet.

18. Verbindungs-/Trennvorrichtung (1) nach Anspruch 16 oder 17, wobei das zweite und das dritte ferromagnetische Teil sowie die zwei Permanentmagneten symmetrisch um die Längsachse (X) des ersten ferromagnetischen Teils herum eingerichtet sind.

19. Verbindungs-/Trennvorrichtung (1) nach einem der Ansprüche 16 bis 18, wobei die Vorrichtung so konfiguriert ist, dass bei einem Versagen des mindestens einen Akkumulators, was eine Überhitzung desselben bewirkt, sich mindestens einer der zwei Permanentmagneten bis auf eine Curie-Temperatur erhitzt, ab der er seine magnetischen Eigenschaften verliert, bis die mechanische Trennung zwischen dem mindestens einen Akkumulator und der Stromschiene bewirkt wird, was ein Abfallen oder eine Bewegung durch Schwerkraft oder eine Bewegung durch eine Aktion mindestens eines mechanischen Mittels des mindestens einen Akkumulators bewirkt.

20. Verbindungs-/Trennvorrichtung (1) nach Anspruch 19, wobei die Curie-Temperatur von mindestens einem der zwei Permanentmagneten so gewählt ist, dass sie zwischen einem Wert nahe 90 % der Selbsterhitzungstemperatur (T1) und einem Wert nahe 110 % der Temperatur beim thermischen Durchgehen (T2) des mindestens einen Akkumulators liegt.

21. Verbindungs-/Trennvorrichtung (1) nach einem der Ansprüche 16 bis 20, wobei jeder der zwei Permanentmagneten ein Sintermagnet oder ein Plastomagnet (120, 121) ist, wobei der Sintermagnet vorzugsweise auf seltenen Erden basiert, vorzugsweise aus Samarium-Cobalt oder Neodym-Eisen-Bor oder vorzugsweise aus Ferrit oder vorzugsweise aus einer Aluminium-Nickel-Cobalt-Legierung besteht, wobei der Plastomagnet vorzugsweise auf seltenen Erden basiert, vorzugsweise aus Samarium-Cobalt oder Neodym-Eisen-Bor oder aus Ferrit besteht.

22. Verbindungs-/Trennvorrichtung nach einem der Ansprüche 16 bis 21, wobei der Schnittstellenadapter mindestens ein elektrisch leitendes Teil (18) beinhaltet, das dazu eingerichtet ist, einen elektrischen Kontakt einerseits zwischen dem anderen der Ausgangsanschlüsse des Akkumulators und der Stromschiene und andererseits zwischen dem zweiten und dritten ferromagnetischen Teil und dem vierten ferromagnetischen Teil (15) zu gewährleisten.

23. Verbindungs-/Trennvorrichtung nach Anspruch 22, die als elektrisch leitendes Teil mindestens eine elektrisch leitende gewellte oder Fächerscheibe (18) beinhaltet.

## Claims

1. Interface adapter (40) comprising:
- a first ferromagnetic piece (14) of longitudinal axis (X), the first ferromagnetic piece being blind, forming a housing for at least one accumulator,
- at least one second and one third ferromagnetic piece (140, 141) arranged in a manner distributed around the longitudinal axis (X) of the first ferromagnetic piece,
- a mechanical and electrical connecting piece (100), made of non-magnetic material, securing the first ferromagnetic piece to the second and third ferromagnetic pieces, forming, between one another, a volume in which there are housed two permanent magnets (120, 121) that are distributed around the longitudinal axis (X) with their opposite magnetic poles in magnetic series, are connected together by the first ferromagnetic piece and are connected to the second and to the third ferromagnetic piece, respectively, forming a magnetic lock (11).

2. Interface adapter according to Claim 2, the Curie temperature of at least one of the two permanent magnets being chosen to be between a value close to 90% of the self-heating temperature (T1) and a value close to 110% of the thermal runaway temperature (T2) of the at least one accumulator intended to be housed in the housing of the ferromagnetic piece.

3. Interface adapter according to Claim 1 or 2, each of the two permanent magnets being a sintered magnet or a plastomagnet (120, 121), the sintered magnet being preferably based on rare earths, preferably made of samarium cobalt or neodymium iron boron, or preferably of ferrite or preferably of aluminium-nickel-cobalt alloy, the plastomagnet being preferably based on rare earths, preferably made of samarium cobalt or neodymium iron boron, or of ferrite.

4. Interface adapter according to either of Claims 1 and 2, comprising at least one electrically conductive piece (18) arranged so as to ensure, for the one part, mutual electrical contact between the other of the output terminals of the accumulator and the busbar and, for the other part, electrical contact between the second and third ferromagnetic piece and the fourth ferromagnetic piece (15).

5. Interface adapter according to Claim 4, comprising, as electrically conductive piece, at least one electrically conductive crinkle or tooth lock washer (18), the washer being preferably made of copper-phosphorus alloy.

6. Interface adapter according to one of Claims 1 to 5, the first, second and third ferromagnetic pieces being made of soft iron.

7. Interface adapter according to one of Claims 1 to 6, the mechanical and electrical connecting piece being made of copper or of aluminium, preferably welded both to the first and to the second and third ferromagnetic pieces.

8. Battery-pack module comprising:
- an accumulator of cylindrical geometry having a packaging consisting of a rigid casing;
- an interface adapter according to one of Claims 1 to 7, the first ferromagnetic piece being a blind cylinder in which the accumulator is housed with contact between the lateral wall and/or the bottom of its rigid casing and that of the blind cylinder, the second and third ferromagnetic pieces being shaped as arced segments of one and the same cylinder that is concentric with the accumulator, the permanent magnets being shaped as arced segments of one and the same cylinder that is concentric with the accumulator.

9. Battery-pack module comprising:
- a plurality of accumulators of cylindrical geometry having a packaging consisting of a rigid casing;
- an interface adapter according to one of Claims 1 to 7, the first ferromagnetic piece being a blind cylinder in which the plurality of accumulators are housed with contact between one another by way of their lateral envelope and with contact between the lateral wall and/or the bottom of all of the rigid casings and that of the blind cylinder, the second and third ferromagnetic pieces being shaped as arced segments of one and the same concentric cylinder around an axis of distribution of the plurality of accumulators, the permanent magnets being shaped as arced segments of one and the same concentric cylinder around an axis of distribution of the plurality of accumulators

10. Battery-pack module comprising:
- an accumulator of stacked geometry having a flexible or rigid packaging of prismatic shape, one of the output terminals of which is arranged on one of the main faces of the packaging;
- an interface adapter according to one of Claims 1 to 7, the first ferromagnetic piece being a blind parallelepiped in which the accumulator is housed with contact between the output terminal on the main face of the packaging and the lateral wall and/or the bottom of the blind parallelepiped, the second and third ferromagnetic pieces being shaped as planar plates that are each parallel to one of the lateral faces of the blind parallelepiped, the permanent magnets being shaped as planar plates that are each parallel to one of the lateral faces of the blind parallelepiped.

11. Battery-pack module comprising:
- a plurality of accumulators of stacked geometry having a flexible or rigid packaging of prismatic shape, one of the output terminals of which is arranged on one of the main faces of the packaging;
- an interface adapter according to one of Claims 1 to 7, the first ferromagnetic piece being a blind parallelepiped in which the accumulators are housed with contact between the output terminal on the main face of at least one of the packagings and the lateral wall and/or the bottom of the blind parallelepiped, the second and third ferromagnetic pieces being shaped as planar plates that are each parallel to one of the lateral faces of the blind parallelepiped, the permanent magnets being shaped as planar plates that are each parallel to one of the lateral faces of the blind parallelepiped.

12. Accumulator (A) comprising:
- a casing of longitudinal axis (X) forming a first ferromagnetic piece (14);
- at least one second and one third ferromagnetic piece (140, 141) arranged in a manner distributed around the longitudinal axis (X) of the first ferromagnetic piece,
- at least one mechanical and electrical connecting element (101), made of non-magnetic material, securing the first ferromagnetic piece to the second and third ferromagnetic pieces, forming, between one another, a volume in which there are housed two permanent magnets (120, 121) that are distributed around the longitudinal axis (X) with their opposite magnetic poles in magnetic series, are connected together by the first ferromagnetic piece and are connected to the second and to the third ferromagnetic piece, respectively, forming a magnetic lock (11).

13. Accumulator (A) according to Claim 12, the mechanical and electrical connecting element (101) being shaped around the second and third ferromagnetic pieces, preferably filling the free volume(s) therebetween and between permanent magnets.

14. Accumulator (A) according to Claim 12 or 13, the mechanical and electrical connecting element (101) being crimped to the casing of the accumulator, holding the second and third ferromagnetic pieces and the two permanent magnets.

15. Battery-pack module comprising a plurality of accumulators of cylindrical geometry having a packaging consisting of a rigid casing according to one of Claims 12 to 14.

16. Device (1) for connection/disconnection between at least one accumulator (A) and an electrical connection bar, called busbar (B1), comprising:
- at least one accumulator (A),
- an interface adapter according to one of Claims 1 to 7, at least one part of its lateral wall and/or of the bottom of its housing being in electrical contact with one of the output terminals of the accumulator,
- at least one fourth ferromagnetic piece (15), secured to the busbar (B1), forming a plate for closing a magnetic circuit with the magnetic lock, the closed magnetic circuit ensuring, during normal operation of the at least one accumulator, a mechanical and electrical connection between the at least one accumulator and the busbar.

17. Device (1) for connection/disconnection between at least one accumulator (A) and an electrical connection bar, called busbar (B1), comprising:
- at least one accumulator according to one of Claims 12 to 14,
- at least one fourth ferromagnetic piece (15), secured to the busbar (B1), forming a plate for closing a magnetic circuit with the magnetic lock, the closed magnetic circuit ensuring, during normal operation of the at least one accumulator, a mechanical and electrical connection between the at least one accumulator and the busbar.

18. Connection/disconnection device (1) according to Claim 16 or 17, the second and a third ferromagnetic piece and the two permanent magnets being arranged symmetrically around the longitudinal axis (X) of the first ferromagnetic piece.

19. Connection/disconnection device (1) according to one of Claims 16 to 18, the device being configured such that, during a failure of the at least one accumulator causing the latter to overheat, at least one of the two permanent magnets heats up to a Curie temperature from which it loses its magnetic properties, so as to bring about the mechanical disconnection between the at least one accumulator and the busbar, causing the at least one accumulator to drop or move under gravity or to move under the action of at least one mechanical means.

20. Connection/disconnection device (1) according to Claim 19, the Curie temperature of at least one of the two permanent magnets being chosen to be between a value close to 90% of the self-heating temperature (T1) and a value close to 110% of the thermal runaway temperature (T2) of the at least one accumulator.

21. Connection/disconnection device (1) according to one of Claims 16 to 20, each of the two permanent magnets being a sintered magnet or a plastomagnet (120, 121), the sintered magnet being preferably based on rare earths, preferably made of samarium cobalt or neodymium iron boron, or preferably of ferrite or preferably of aluminium-nickel-cobalt alloy, the plastomagnet being preferably based on rare earths, preferably made of samarium cobalt or neodymium iron boron, or of ferrite.

22. Connection/disconnection device according to one of Claims 16 to 21, the interface adapter comprising at least one electrically conductive piece (18) arranged so as to ensure, for the one part, mutual electrical contact between the output terminals of the accumulator and the busbar and, for the other part, electrical contact between the second and third ferromagnetic piece and the fourth ferromagnetic piece (15).

23. Connection/disconnection device according to Claim 22, comprising, as electrically conductive piece, at least one electrically conductive crinkle or tooth lock washer (18).
